# EUROPEAN PATENT APPLICATION

(11) **EP 1 104 218 A2**
(43) Date of publication of application: **30.05.2001**
(21) Application number: 00120230.8
(22) Date of filing: 26.09.2000
(51) Int. Cl.: H04Q 11/04

(54) **Dynamic virtual-channel management circuit**

(30) Priority: 26.11.1999 JP 33645799
(71) Applicant: FUJITSU LIMITED, Kawasaki-shi, Kanagawa 211-8588 (JP)
(72) Inventor: Shimada, Nagao, Fujitsu Limited, Kawasaki-shi, Kanagawa 211-8588 (JP); Shinomiya, Tomohiro, Fujitsu Limited, Kawasaki-shi, Kanagawa 211-8588 (JP); Tanaka, Jun, Fujitsu Limited, Kawasaki-shi, Kanagawa 211-8588 (JP)
(74) Representative: HOFFMANN - EITLE

(57) **Abstract**

A dynamic virtual-channel management circuit (20) that executes a data operation for a frame unit such as an EPD operation and a PPD operation in a network device which cannot obtain contract information of an AAL5-type virtual channel in which the operation for a frame unit is enabled, by extracting the AAL5-type virtual channel from an AAL5-type ATM cell received, and registering the AAL5-type virtual channel to a virtual-channel management memory (26) located therein.

## Description

### BACKGROUND OF THE INVENTION

### 1. Field of the Invention

The present invention relates to a dynamic virtual-channel management circuit and a device whereto the dynamic virtual-channel management circuit is applied. More particularly, the present invention relates to a dynamic virtual-channel management circuit that manages a virtual channel dynamically in an ATM communication device, and a device whereto the dynamic virtual-channel management circuit is applied.

### 2. Description of the Related Art

Recently, the demand for data communication has been increasing rapidly. In the data communication, since a high layer such as an IP (Internet Protocol) transfers data for every frame, a data transmission using an ATM (Asynchronous Transfer Mode) service is also executed for every frame. Accordingly, in a case that the ATM is applied to the data transmission, an AAL5 (AAL Type 5) is used for an AAL (ATM Adaptation Layer) located between the high layer and the ATM layer so that a cell header of an ATM cell can include information that indicates a beginning and an end of the ATM cell in the frame.

The cell header of an ATM cell includes the information as described below. The high layer is initially divided into cells for each virtual channel (VC). An AAL5-type ATM cell includes a value "1" for the least significant bit in a 3-bit PTI (Payload-Type Identifier) field in its cell header, that is, an AUU (ATM-User to ATM-User Indication) bit in the PTI field. Other ATM cells include the value "0" for their AUU bit. Accordingly, the beginning and the end of a frame with AAL5-type ATM cells are detected by monitoring the AUU bit of the ATM cells supplied to the dynamic virtual-channel management circuit.

A user of virtual channels generally contracts for each virtual channel in an ATM service, and sets up a connection for each virtual channel. However, there exists a network device that only operates a Virtual Path (VP) as a unit so that the device cannot obtain contract information of each virtual channel. Accordingly, the user cannot know how the virtual channel is multiplexed in the virtual path.

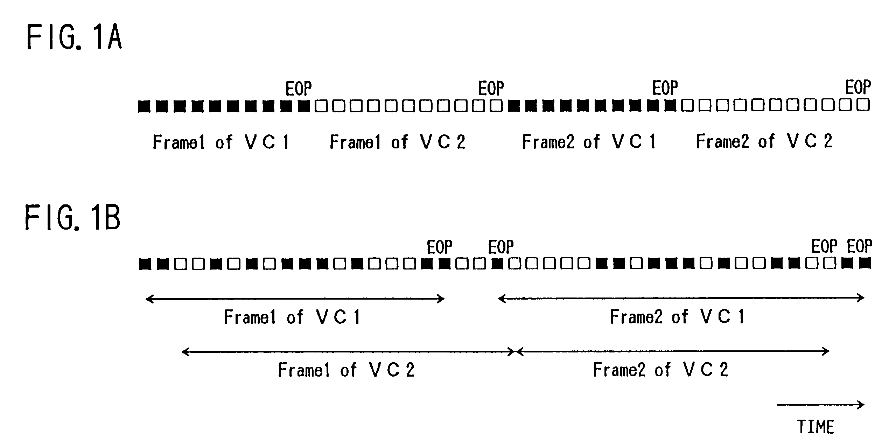

FIGS. 1A and 1B show a multiplexed virtual channel. In FIGS. 1A and 1B, a black square shows a cell in a frame 1 of a virtual channel 1 (VC1) and a cell in a frame 2 of the virtual channel 1, and a white square shows a cell in a frame 1 of a virtual channel 2 (VC2) and a cell in a frame 2 of the virtual channel 2.

If a terminal device outputs data for every frame as shown in FIG. 1A, it is very simple to handle each frame of the virtual channels 1 and 2. However, the virtual channels 1 and 2 are generally multiplexed as shown in FIG. 1B so that each end of frames of the virtual channels 1 and 2 is unidentified. Consequently, an operation such as an EPD (Early Packet Discard) operation or a PPD (Partial Packet Discard) operation for a frame unit cannot be executed so that communication performance of data between the terminal device and other network devices is aggravated.

### SUMMARY OF THE INVENTION

Accordingly, it is a general object of the present invention to provide a dynamic virtual-channel management circuit that executes a data operation for a frame unit in a network device which cannot obtain contract information of an AAL5-type virtual channel wherein the operation for a frame unit is enabled, by extracting the AAL5-type virtual channel from an AAL5-type ATM cell, and registering the AAL5-type virtual channel to a virtual-channel management memory, in which the disadvantages described above are eliminated.

The above-described object of the present invention is achieved by a dynamic virtual-channel management circuit, including a virtual-channel detecting unit that detects a specific virtual channel among virtual channels provided to the dynamic virtual-channel management circuit, and a virtual-channel management memory that stores contract information on the specific virtual channel detected by the virtual-channel detecting unit.

Additionally, it is another object of the present invention to provide a device whereto the above-described dynamic virtual-channel management circuit is applied.

The above-described object of the present invention is achieved by a device including a dynamic virtual-channel management circuit including a virtual-channel detecting unit that detects a specific virtual channel among virtual channels provided to the dynamic virtual-channel management circuit, and a virtual-channel management memory that stores contract information on the specific virtual channel detected by the virtual-channel detecting unit, a first cell-buffer that stores ATM cells other than an ATM cell with the specific virtual channel, a second cell-buffer that stores the ATM cell with the specific virtual channel, and a buffer selecting unit that supplies the ATM cells other than the ATM cell with the specific virtual channel to the first cell-buffer, and the ATM cell with the specific virtual channel to the second cell-buffer.

Other objects, features and advantages of the present invention will become more apparent from the following detailed description when read in conjunction with the accompanying drawings.

### BRIEF DESCRIPTION OF THE DRAWINGS

FIGS. 1A and 1B are diagrams showing a multiplexed virtual channel;
FIG. 2 is a block diagram showing a dynamic virtual-channel management circuit according to a first embodiment of the present invention;
FIG. 3 is a flowchart showing a process taken by the dynamic virtual-channel management circuit according to the first embodiment of the present invention;
FIG. 4 is a diagram showing a format of a registration request;
FIG. 5 is a block diagram showing a dynamic virtual-channel management circuit according to a second embodiment of the present invention;
FIG. 6 is a diagram showing a function of a time counter in the dynamic virtual-channel management circuit according to the second embodiment of the present invention;
FIG. 7 is a block diagram showing a dynamic virtual-channel management circuit according to a third embodiment of the present invention;
FIG. 8 is a flowchart showing a process taken by the dynamic virtual-channel management circuit according to the third embodiment of the present invention;
FIG. 9 is a block diagram showing a dynamic virtual-channel management circuit according to a fourth embodiment of the present invention;
FIG. 10 is a block diagram showing a dynamic virtual-channel management circuit according to a fifth embodiment of the present invention;
FIG. 11 is a block diagram showing a dynamic virtual-channel management circuit according to a sixth embodiment of the present invention;
FIG. 12 is a flowchart showing a process taken by the dynamic virtual-channel management circuit according to the sixth embodiment of the present invention;
FIG. 13 is a block diagram showing a dynamic virtual-channel management circuit according to a seventh embodiment of the present invention;
FIG. 14 is a block diagram showing a dynamic virtual-channel management circuit according to an eighth embodiment of the present invention;
FIGS. 15A and 15B are diagrams showing an EPD operation of ATM cells;
FIG. 16 is a block diagram showing a first embodiment of a virtual-channel management device whereto a dynamic virtual-channel management circuit according to the present invention is applied;
FIG. 17 is a flowchart showing the EPD operation executed by the first embodiment of the virtual-channel management device;
FIG. 18 is a diagram showing a format of control information;
FIGS. 19A, 19B and 19C are diagrams showing a PPD operation of ATM cells.
FIG. 20 is a block diagram showing a second embodiment of a virtual-channel management device whereto a dynamic virtual-channel management circuit according to the present invention is applied;
FIG. 21 is a flowchart showing the PPD operation executed by the second embodiment of the virtual-channel management device;
FIG. 22 is a block diagram showing a dynamic virtual-channel management circuit according to a ninth embodiment of the present invention;
FIG. 23 is an ATM cell format with a tag;
FIG. 24 is a block diagram showing a dynamic virtual-channel management circuit according to a tenth embodiment of the present invention;
FIG. 25 is a block diagram showing a dynamic virtual-channel management circuit according to an eleventh embodiment of the present invention;
FIG. 26 is a block diagram showing a dynamic virtual-channel management circuit according to a twelfth embodiment of the present invention;
FIG. 27 is a block diagram showing a third embodiment of a virtual-channel management device whereto a dynamic virtual-channel management circuit according to the present invention is applied; and
FIG. 28 is a block diagram showing a fourth embodiment of a virtual-channel management device whereto a dynamic virtual-channel management circuit according to the present invention is applied.

### DESCRIPTION OF THE PREFERRED EMBODIMENTS

A description will now be given of preferred embodiments of the present invention, with reference to the accompanying drawings.

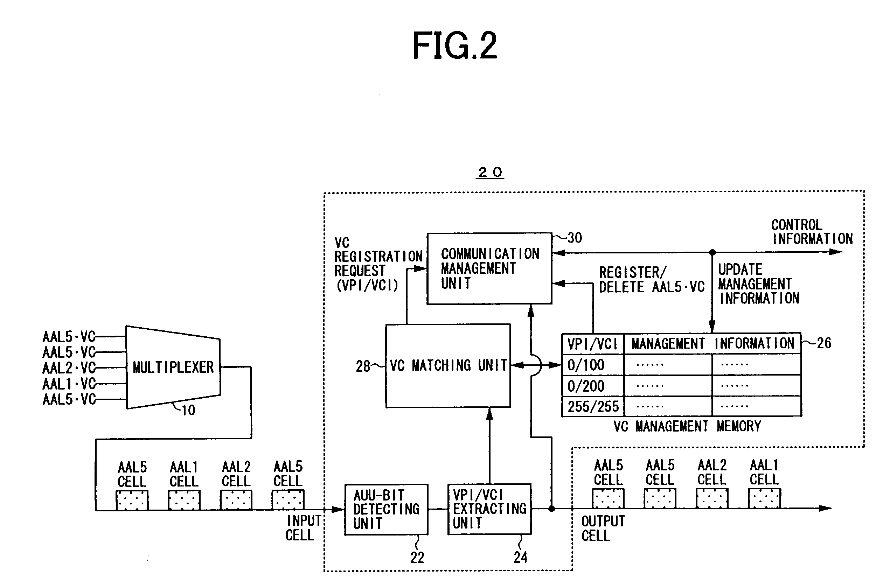

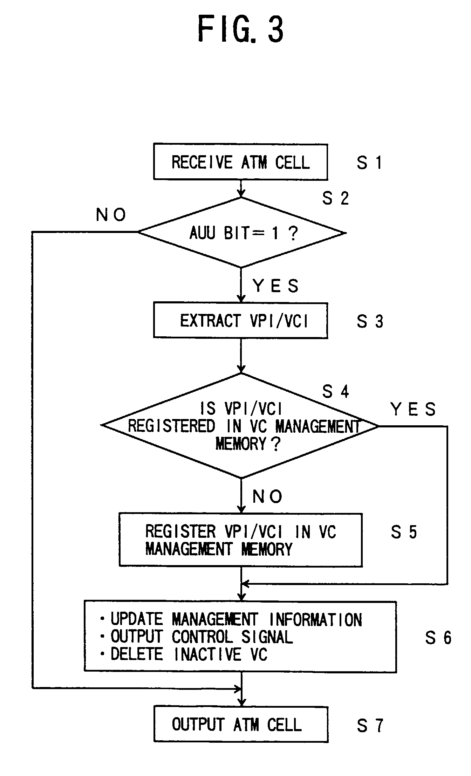

FIG. 2 is a block diagram showing a dynamic virtual-channel management circuit according to a first embodiment of the present invention. Additionally, FIG. 3 is a flowchart showing a process taken by the dynamic virtual-channel management circuit according to the first embodiment of the present invention.

A dynamic virtual-channel (VC) management circuit 20 includes an AUU-bit detecting unit 22, a VPI/VCI extracting unit 24, a VC management memory 26, a VC matching unit 28 and a communication management unit 30.

In FIG. 2, plural ATM cells with various AALs such as an AAL5, an AAL2 and an AAL1 are initially multiplexed by a multiplexer 10 located outside the dynamic VC management circuit 20, and are supplied to the AUU-bit detecting unit 22 of the dynamic VC management circuit 20. After an ATM cell is received at a step S1 of FIG. 3, the AUU-bit detecting unit 22 checks an AUU bit, that is, the least significant bit in a 3-bits PTI field located in the cell header of the ATM cell at a step S2.

If the AUU bit of the ATM cell is a value "0", that is, the ATM cell is not an AAL5-type ATM cell, the ATM cell is transferred to the VPI/VCI extracting unit 24, and is outputted therefrom to other devices located outside the dynamic VC management circuit 20 at a step S7.

If the AUU bit of the ATM cell is a value "1", that is, the ATM cell is an AAL5-type ATM cell, the AUU-bit detecting unit 22 requests the VPI/VCI extracting unit 24 to extract a VPI (Virtual Path Identifier) and a VCI (Virtual Channel Identifier) from the ATM cell. It should be noted that the VPI and the VCI are expressed as the VPI/VCI, hereinafter.

Subsequently, at a step S3, the VPI/VCI extracting unit 24 extracts the VPI/VCI that is requested by the AUU-bit detecting unit 22 to be extracted from the AAL5-type ATM cell among ATM cells supplied through the AUU-bit detecting unit 22 to the VPI/VCI extracting unit 24. At the step S3, the VPI/VCI extracting unit 24 supplies the extracted VPI/VCI to the VC matching unit 28, and supplies the AAL5-type ATM cell to the communication management unit 30.

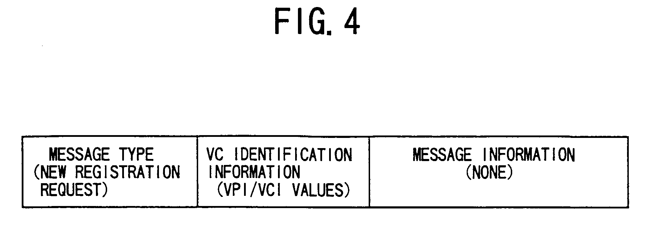

The VC matching unit 28 compares the VPI/VCI that is extracted by the VPI/VCI extracting unit 24 with every VPI/VCI initially registered in the VC management memory 26 at a step S4. If the extracted VPI/VCI matches a VPI/VCI registered in the VC management memory 26, the dynamic VC management circuit 20 proceeds to a later described step S6. If the extracted VPI/VCI do not match the VPI/VCI registered in the VC management memory 26, the VC matching unit 28 requests the communication management unit 30 by use of a format shown in FIG. 4 to register the extracted VPI/VCI in the VC management memory 26, and proceeds to a step S5. In FIG. 4, a message type is a new registration request, and VC identification information includes a value of the extracted VPI/VCI. At the step S5, the communication management unit 30 registers the extracted VPI/VCI in the VC management memory 26.

Subsequently, at the step S6, the communication management unit 30 updates the VC management memory 26 with using management information extracted from the AAL5-type ATM cell, and outputs control information to other devices. The above-described management information includes, for example, information indicating whether the ATM cell is an EOP cell of a frame. Additionally, the communication management unit 30 monitors whether virtual channels registered in the VC management memory 26 are active. If an inactive virtual channel is detected in the VC management memory 26, the communication management unit 30 deletes the inactive virtual channel from the VC management memory 26. Subsequently the AAL5-type ATM cell is outputted from the VPI/VCI extracting unit 24 to other circuits outside the dynamic VC management device 20 at the step S7.

According to the first embodiment of the present invention, the dynamic VC management circuit 20 can manage only active AAL5-type virtual channels that enable frame unit operations, by registering AAL5-type virtual channels to the VC management memory 26 if the AAL5-type virtual channels are previously not in the VC management memory 26.

A description will now be given of a dynamic VC management circuit wherein the communication management unit 30 manages virtual channels by use of a time counter.

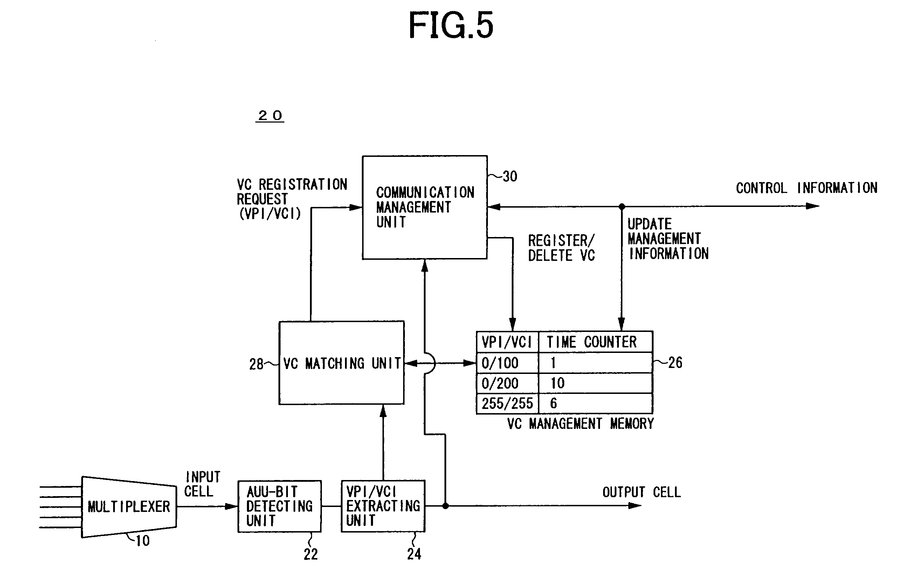

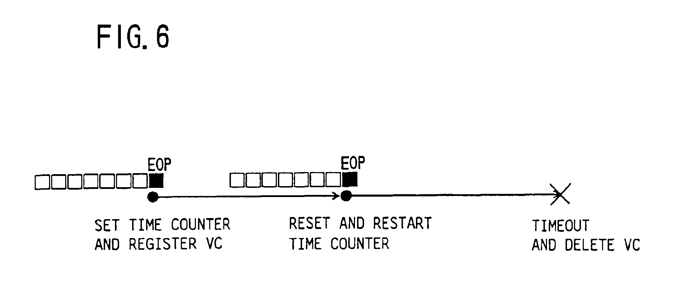

FIG. 5 is a block diagram showing a dynamic VC management circuit according to a second embodiment of the present invention. Additionally, FIG. 6 shows a function of a time counter in the dynamic VC management circuit according to the second embodiment of the present invention.

A dynamic virtual-channel (VC) management circuit 20 includes an AUU-bit detecting unit 22, a VPI/VCI extracting unit 24, a VC management memory 26, a VC matching unit 28 and a communication management unit 30. As shown in FIG. 5, a time counter is provided for each VPI/VCI in the VC management memory 26, that is, for each virtual channel.

Initially, plural ATM cells with various AALs such as an AAL5, an AAL2 and an AAL1 are multiplexed by a multiplexer 10 located outside the dynamic VC management circuit 20, and are supplied to the AUU-bit detecting unit 22 of the dynamic VC management circuit 20. After an ATM cell is received, the AUU-bit detecting unit 22 checks an AUU bit, that is, the least significant bit in a 3-bits PTI field located in the cell header of the ATM cell.

If the AUU bit of the ATM cell is a value "0", that is, the ATM cell is not an AAL5-type ATM cell, the ATM cell is transferred to the VPI/VCI extracting unit 24, and is outputted therefrom to other circuits located outside the dynamic VC management circuit 20.

If the AUU bit of the ATM cell is a value "1", that is, the ATM cell is an AAL5-type ATM cell, the AUU-bit detecting unit 22 requests the VPI/VCI extracting unit 24 to extract a VPI/VCI from the AAL5-type ATM cell. Subsequently, the VPI/VCI extracting unit 24 extracts the VPI/VCI that is requested by the AUU-bit detecting unit 22 to be extracted from the AAL5-type ATM cell among ATM cells supplied through the AUU-bit detecting unit 22 to the VPI/VCI extracting unit 24. The VPI/VCI extracting unit 24 then supplies the extracted VPI/VCI to the VC matching unit 28, and supplies the AAL5-type ATM cell to the communication management unit 30. Additionally, the VPI/VCI extracting unit 24 outputs the AAL5-type ATM cell therefrom to other devices located outside the dynamic VC management circuit 20.

The VC matching unit 28 compares the VPI/VCI that is extracted by the VPI/VCI extracting unit 24 with every VPI/VCI initially registered in the VC management memory 26. If the extracted VPI/VCI does not match the VPI/VCI registered in the VC management memory 26, the VC matching unit 28 requests the communication management unit 30 to register the extracted VPI/VCI in the VC management memory 26. Subsequently, the communication management unit 30 registers the extracted VPI/VCI in the VC management memory 26.

The communication management unit 30 then updates the VC management memory 26 with using management information extracted from the AAL5-type ATM cell, and outputs control information to other devices. The above-described management information includes, for example, information indicating whether the AAL5-type ATM cell is an EOP (End Of Packet) cell of a frame. When the AAL5-type ATM cell is detected as an EOP cell, the communication management unit 30 resets the time counter corresponding to the VPI/VCI of the AAL5-type ATM cell in the VC management memory 26. The communication management unit 30 increments a time counter for each VPI/VCI in the VC management memory 26 each time a certain period elapses. If a number counted by the time counter for a VPI/VCI in the VC management memory 26 exceeds a predetermined number before an EOP cell corresponding to the VPI/VCI is detected, the communication management unit 30 ascertains that a timeout has occurred at the time counter, and deletes the VPI/VCI from the VC management memory 26.

Accordingly, the dynamic VC management circuit 20 can delete a virtual channel that has not been used in the dynamic VC management circuit 20 for a certain period of time, from the VC management memory 26.

A description will now be given of a dynamic VC management circuit according to a third embodiment of the present invention.

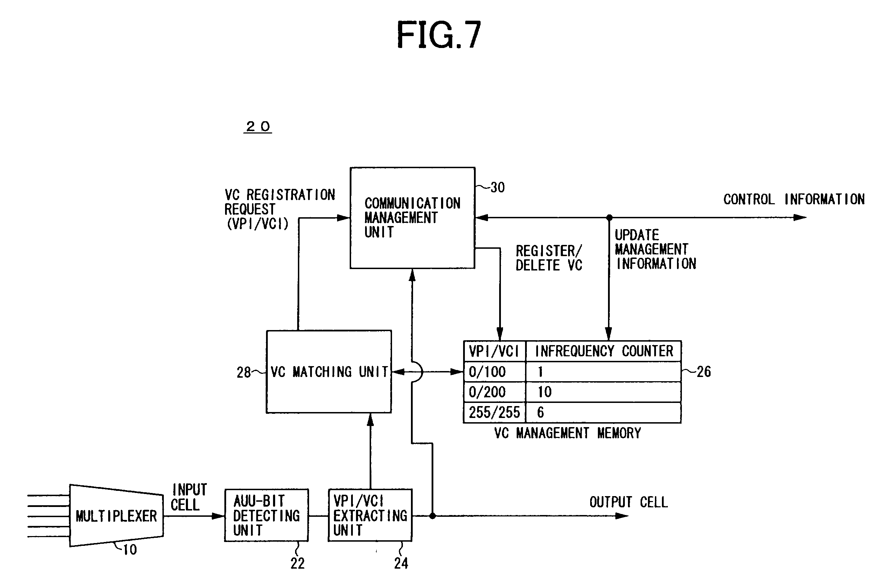

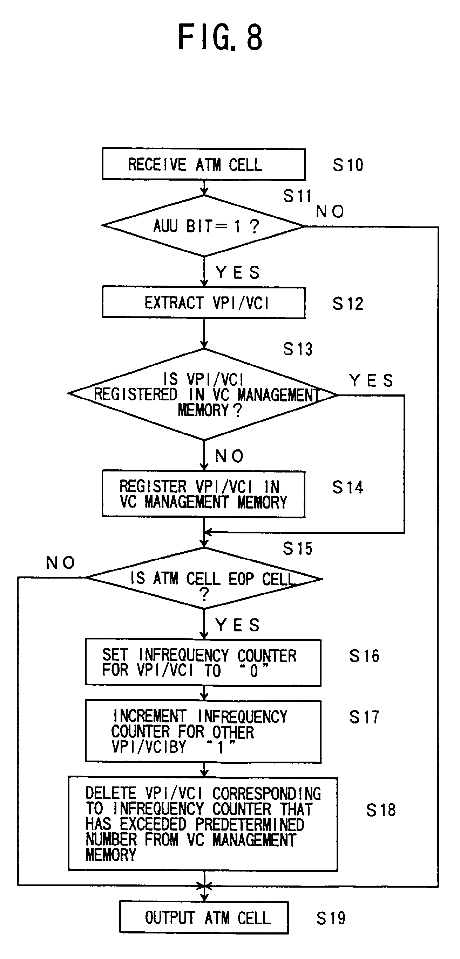

FIG. 7 is a block diagram showing a dynamic VC management circuit according to the third embodiment of the present invention. Additionally, FIG. 8 shows a function of the dynamic VC management circuit according to the third embodiment of the present invention.

A dynamic virtual-channel (VC) management circuit 20 includes an AUU-bit detecting unit 22, a VPI/VCI extracting unit 24, a virtual-channel (VC) management memory 26, a VC matching unit 28 and a communication management unit 30. As shown in FIG. 7, an infrequency counter is provided for each VPI/VCI in the VC management memory 26. The infrequency counter indicates how seldom the VPI/VCI of a virtual channel corresponding to the infrequency counter is used in the dynamic VC management circuit 20.

Initially, plural ATM cells with various AALs such as an AAL5, an AAL2 and an AAL1 are multiplexed by a multiplexer 10 located outside the dynamic VC management circuit 20, and are supplied to the AUU-bit detecting unit 22 of the dynamic VC management circuit 20. After an ATM cell is received at a step S10, the AUU-bit detecting unit 22 checks an AUU bit, that is, the least significant bit in a 3-bits PTI field located in the cell header of the ATM cell at a step S11.

If the AUU bit of the ATM cell is a value "0", that is, the ATM cell is not an AAL5-type ATM cell, the ATM cell is transferred to the VPI/VCI extracting unit 24, and is outputted therefrom to other circuits located outside the dynamic VC management circuit 20 at a step S19.

If the AUU bit of the ATM cell is a value "1", that is, the ATM cell is an AAL5-type ATM cell, the AUU-bit detecting unit 22 requests the VPI/VCI extracting unit 24 to extract a VPI/VCI from the AAL5-type ATM cell. Subsequently, the VPI/VCI extracting unit 24 extracts the VPI/VCI that is requested by the AUU-bit detecting unit 22 to be extracted from the AAL5-type ATM cell among ATM cells supplied through the AUU-bit detecting unit 22 to the VPI/VCI extracting unit 24 at a step S12. The VPI/VCI extracting unit 24 then supplies the extracted VPI/VCI to the VC matching unit 28, and supplies the AAL5-type ATM cell to the communication management unit 30.

The VC matching unit 28 compares the VPI/VCI that is extracted by the VPI/VCI extracting unit 24 with every VPI/VCI initially registered in the VC management memory 26 at a step S13. If the extracted VPI/VCI matches the VPI/VCI registered in the VC management memory 26, the next step is a later described step S15. If the extracted VPI/VCI does not match the VPI/VCI registered in the VC management memory 26, the VC matching unit 28 requests the communication management unit 30 to register the extracted VPI/VCI in the VC management memory 26. Subsequently, the communication management unit 30 registers the extracted VPI/VCI in the VC management memory 26 at a step S14.

The communication management unit 30 then updates the VC management memory 26 with using management information extracted from the AAL5-type ATM cell, and outputs control information to other devices. The above-described management information includes, for example, information indicating whether the AAL5-type ATM cell is an EOP (End Of Packet) cell of a frame.

If the AAL5-type ATM cell is determined as an ATM cell other than an EOP cell at the step S15, the AAL5-type ATM cell is outputted to other devices located outside the dynamic VC management circuit 20. If the AAL5-type ATM cell is detected as an EOP cell at the step S15, the communication management unit 30 resets the infrequency counter corresponding to the VPI/VCI of the AAL5-type ATM cell in the VC management memory 26 at a step S16. Additionally, the communication management unit 30 increments an infrequency counter corresponding to each VPI/VCI other than the VPI/VCI of the AAL5-type ATM cell in the VC management memory 26 by "1" at a step S17. If a number counted by an infrequency counter for a VPI/VCI exceeds a predetermined number before an EOP cell with the VPI/VCI is detected, the communication management unit 30 ascertains that the VPI/VCI corresponding to the infrequency counter is not frequently used, and deletes the VPI/VCI from the VC management memory 26 at a step S18. Additionally, the VPI/VCI extracting unit 24 outputs the AAL5-type ATM cell therefrom to other devices located outside the dynamic VC management circuit 20.

Accordingly, the dynamic VC management circuit 20 can delete a virtual channel that is not frequently used in the dynamic VC management circuit 20 from the VC management memory 26 when the infrequency counter corresponding to the VPI/VCI of the virtual channel exceeds the predetermined number.

A description will now be given of a dynamic VC management circuit 20 that limits a registration of a VPI/VCI to the VC management memory 26 if there is no more space for new entries in the VC management memory 26.

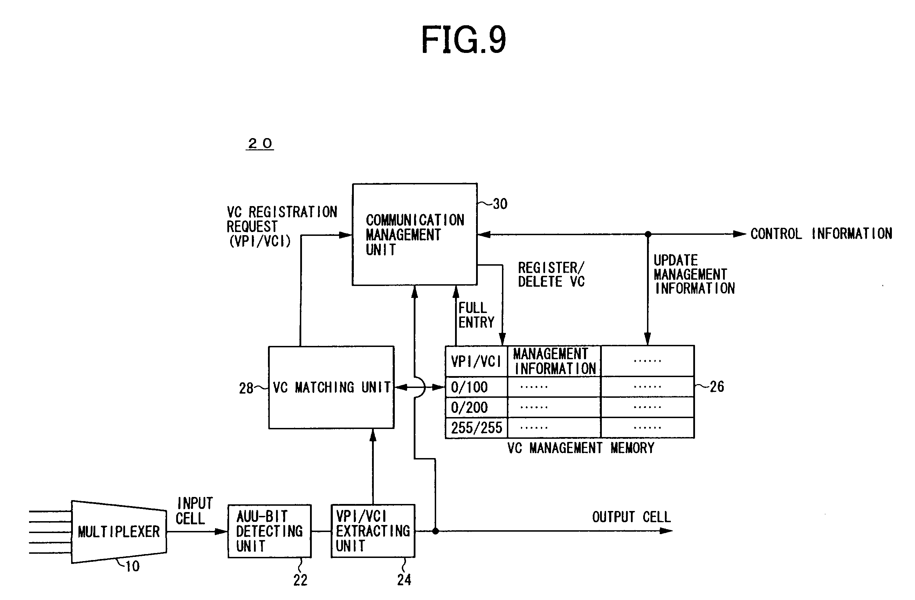

FIG. 9 is a block diagram showing a dynamic VC management circuit according to a fourth embodiment of the present invention.

A dynamic virtual-channel (VC) management circuit 20 includes an AUU-bit detecting unit 22, a VPI/VCI extracting unit 24, a virtual-channel (VC) management memory 26, a VC matching unit 28 and a communication management unit 30.

Initially, plural ATM cells with various AALs such as an AAL5, an AAL2 and an AAL1 are multiplexed by a multiplexer 10 located outside the dynamic VC management circuit 20, and are supplied to the AUU-bit detecting unit 22 of the dynamic VC management circuit 20. After an ATM cell is received, the AUU-bit detecting unit 22 checks an AUU bit, that is, the least significant bit in a 3-bits PTI field located in the cell header of the ATM cell.

If the AUU bit of the ATM cell is a value "0", that is, the ATM cell is not an AAL5-type ATM cell, the ATM cell is transferred to the VPI/VCI extracting unit 24, and is outputted therefrom to other circuits located outside the dynamic VC management circuit 20.

If the AUU bit of the ATM cell is a value "1", that is, the ATM cell is an AAL5-type ATM cell, the AUU-bit detecting unit 22 requests the VPI/VCI extracting unit 24 to extract a VPI/VCI from the AAL5-type ATM cell. Subsequently, the VPI/VCI extracting unit 24 extracts the VPI/VCI that is requested by the AUU-bit detecting unit 22 to be extracted from the AAL5-type ATM cell among ATM cells supplied through the AUU-bit detecting unit 22 to the VPI/VCI extracting unit 24. The VPI/VCI extracting unit 24 then supplies the extracted VPI/VCI to the VC matching unit 28, and supplies the AAL5-type ATM cell to the communication management unit 30.

The VC matching unit 28 compares the VPI/VCI that is extracted by the VPI/VCI extracting unit 24 with every VPI/VCI initially registered in the VC management memory 26. If the extracted VPI/VCI does not match the VPI/VCI registered in the VC management memory 26, the VC matching unit 28 requests the communication management unit 30 to register the extracted VPI/VCI in the VC management memory 26. Subsequently, the communication management unit 30 registers the extracted VPI/VCI in the VC management memory 26.

When the VC matching unit 28 requests the communication management unit 30 to register the extracted VPI/VCI in the VC management memory 26, if the communication management unit 30 receives from the VC management memory 26 a signal indicating that the VC management memory 26 cannot accept anymore VPI/VCI entries, the communication management unit 30 does not register the extracted VPI/VCI to the VC management memory 26.

If the registration of the VPI/VCI is successfully executed, the communication management unit 30 updates the VC management memory 26 with using management information extracted from the AAL5-type ATM cell, and outputs control information to other devices. The above-described management information includes, for example, information indicating whether the ATM cell is an EOP cell of a frame. Additionally, the communication management unit 30 monitors whether virtual channels registered in the VC management memory 26 are active. If an inactive virtual channel is detected in the VC management memory 26, the communication management unit 30 deletes the inactive virtual channel from the VC management memory 26. Additionally, the VPI/VCI extracting unit 24 outputs the ATM cell therefrom to other devices located outside the dynamic VC management circuit 20.

According to the fourth embodiment of the present invention, a new VPI/VCI is registered to the VC management memory 26 if the VC management memory 26 has vacancy for new entries. In other words, the VC management memory 26 does not accept a new entry when it has no more space for the entry.

A description will now be given of a dynamic virtual-channel (VC) management circuit that deletes an entry which time counter includes the highest number among all the entries in a VC management memory when there is no more space for a new entry therein, and registers the new entry thereto.

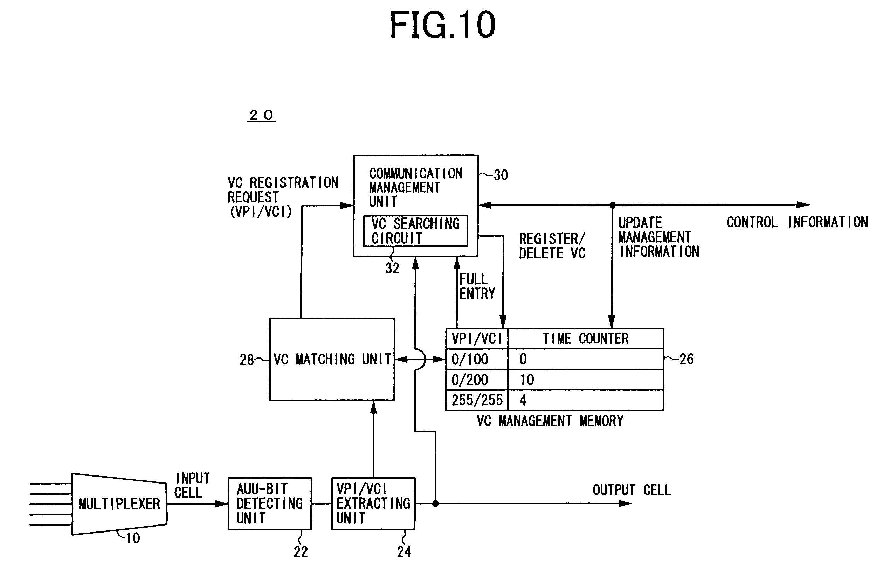

FIG. 10 is a block diagram showing a dynamic VC management circuit according to a fifth embodiment of the present invention.

A dynamic VC management circuit 20 includes an AUU-bit detecting unit 22, a VPI/VCI extracting unit 24, a VC management memory 26, a VC matching unit 28 and a communication management unit 30. As shown in FIG. 10, a VC searching circuit 32 is provided in the communication management unit 30, and a time counter is provided for each VPI/VCI in the VC management memory 26.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as outputting other ATM cells to other devices located outside the dynamic VC management circuit 20.

The VC matching unit 28 checks whether a VPI/VCI extracted by the VPI/VCI extracting unit 24 from the AAL5-type ATM cell is registered in the VC management memory 26. If the extracted VPI/VCI is already registered in the VC management memory 26, the communication management unit 30 proceeds to a later described EOP cell detecting process.

If the extracted VPI/VCI is not registered in the VC management memory 26, the VC matching unit 28 requests the communication management unit 30 to register the VPI/VCI as a new entry in the VC management memory 26. Simultaneously, the VC management memory 26 sends a notification signal to the communication management unit 30 if there is no more space for a new entry in the VC management memory 26. If the notification signal is not supplied from the VC management memory 26 to the communication management unit 30, the communication management unit 30 registers the VPI/VCI to the VC management memory 26. If the notification signal is supplied from the VC management memory 26 to the communication management unit 30, the VC searching circuit 32 locates a VPI/VCI which time counter includes the highest number among all VPI/VCI entries in the VC management memory 26 by checking a time counter for each VPI/VCI in order.

Subsequently, the communication management unit 30 deletes the located VPI/VCI from the VC management memory 26, and then the VPI/VCI of the AAL5-type ATM cell extracted by the VPI/VCI extracting unit 24 is registered as a new entry to the VC management memory 26. At the following EOP cell detecting process, the AAL5-type ATM cell is checked whether it is an EOP cell. If it is ascertained that the AAL5-type ATM cell is not an EOP cell, the AAL5-type cell is outputted to other devices located outside the dynamic VC management circuit 20. If it is ascertained that the AAL5-type ATM cell is the EOP cell, the communication management unit 30 resets the time counter for the VPI/VCI of the AAL5-type ATM cell. Additionally, the communication management unit 30 increments time counters for all VPI/VCI entries in the VC management memory 26 each time a certain period elapses.

According to the fifth embodiment of the present invention, the dynamic VC management circuit 20 deletes a virtual channel entry which time counter includes the highest number among all the virtual channel entries in the VC management memory 26 when there is no more space for a new entry therein, and registers the new entry thereto.

A description will now be given of a dynamic virtual-channel (VC) management circuit that deletes a virtual channel entry which infrequency counter includes the highest number among all the entries in a VC management memory when there is no more space for a new entry therein, and registers a new entry thereto.

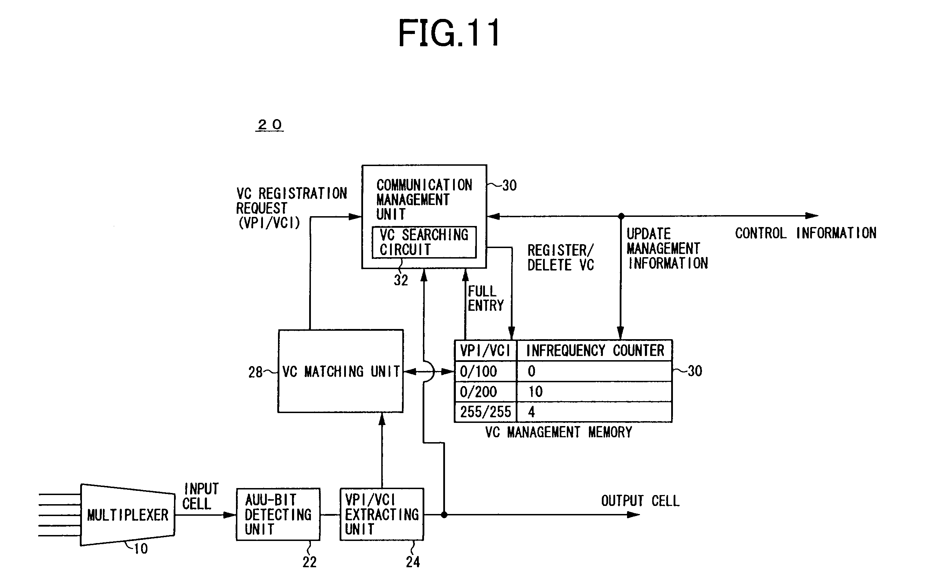

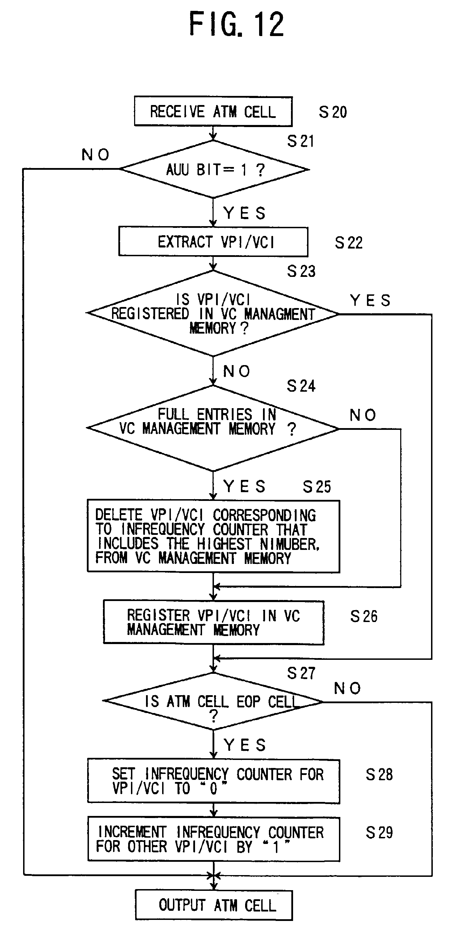

FIG. 11 is a block diagram showing a dynamic VC management circuit according to a sixth embodiment of the present invention. Additionally, FIG. 12 shows a function of the dynamic VC management circuit according to the sixth embodiment of the present invention.

A dynamic VC management circuit 20 includes an AUU-bit detecting unit 22, a VPI/VCI extracting unit 24, a VC management memory 26, a VC matching unit 28 and a communication management unit 30. As shown in FIG. 11, a VC searching circuit 32 is provided in the communication management unit 30, and an infrequency counter is provided for each VPI/VCI in the VC management memory 26.

When the AUU-bit detecting unit 22 detects an ATM cell received from outside the dynamic VC management circuit 20 as an ATM cell other than an AAL5-type ATM cell at a step S21, the ATM cell is outputted to other devices from the VPI/VCI extracting unit 24.

When the AUU-bit detecting unit 22 detects an ATM cell received from outside the dynamic VC management circuit 20 as an AAL5-type ATM cell at a step S21, the other components in the dynamic VC management circuit 20 execute the following processes.

At a step S23, the VC matching unit 28 checks whether a VPI/VCI extracted at a step S22 by the VPI/VCI extracting unit 24 from the AAL5-type ATM cell is registered in the VC management memory 26. If the extracted VPI/VCI is already registered in the VC management memory 26, the communication management unit 30 proceeds to a later described step S27.

If the extracted VPI/VCI is not registered in the VC management memory 26, the VC matching unit 28 requests the communication management unit 30 to register the VPI/VCI as a new entry in the VC management memory 26. Simultaneously, the VC management memory 26 sends a notification signal to the communication management unit 30 at a step S24 if there is no more space for a new entry in the VC management memory 26. If the notification signal is not supplied from the VC management memory 26 to the communication management unit 30 at the step S24, the VPI/VCI is registered as a new entry to the VC management memory 26. If the notification signal is supplied from the VC management memory 26 to the communication management unit 30 at the step S24, the VC searching circuit 32 locates a VPI/VCI which infrequency counter includes the highest number among all the VPI/VCI entries in the VC management memory 26 by checking an infrequency counter for each VPI/VCI in order.

Subsequently, the communication management unit 30 deletes the located VPI/VCI from the VC management memory 26 at a step S25, and the VPI/VCI of the AAL5-type ATM cell extracted by the VPI/VCI extracting unit 24 is registered as a new entry to the VC management memory 26 at a step S26.

At the following step S27, the communication management unit 30 checks whether the AAL5-type ATM cell is an EOP cell. If it is ascertained at the step S27 that the AAL5-type ATM cell is not the EOP cell, the AAL5-type ATM cell is outputted from the VPI/VCI extracting unit 24 to other devices. If it is ascertained at the step S27 that the AAL5-type ATM cell is the EOP cell, the communication management unit 30 resets the infrequency counter corresponding to the VPI/VCI of the AAL5-type ATM cell that is newly registered to the VC management memory 26 at a step S28. The communication management unit 30 then increments an infrequency counter corresponding to each VPI/VCI other than the VPI/VCI of the AAL5-type ATM cell in the VC management memory 26 by "1" at a step S29. Additionally the VPI/VCI extracting unit 24 outputs the AAL5-type ATM cell to other devices.

According to the sixth embodiment of the present invention, the dynamic VC management circuit 20 deletes a virtual channel entry which infrequency counter includes the highest number among all the virtual channel entries in the VC management memory 26 when there is no more space for a new entry therein, and registers the new entry thereto.

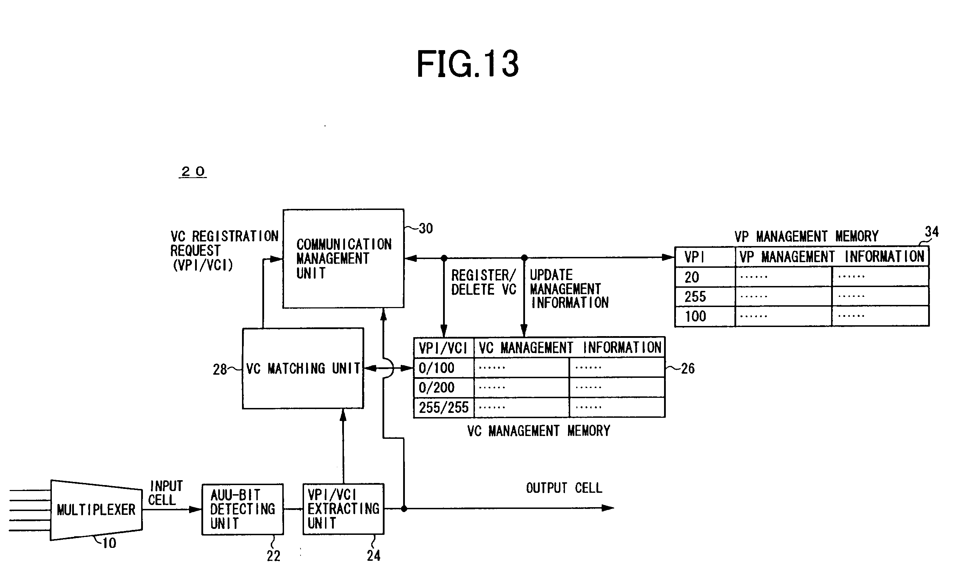

There exists a network device that stores management information about its virtual paths (VPs), but does not store management information about its virtual channels (VCs). A description will now be given of a dynamic virtual-channel (VC) management circuit that uses VP management information stored in a VP management memory for VC management information. FIG. 13 is a block diagram showing a dynamic VC management circuit according to a seventh embodiment of the present invention.

A dynamic VC management circuit 20 includes an AUU-bit detecting unit 22, a VPI/VCI extracting unit 24, a VC management memory 26, a VC matching unit 28, a communication management unit 30, and a VP management memory 34. The VC management memory 26 stores VC management information, and the VP management memory 34 initially stores VP management information.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as outputting other ATM cells to other devices located outside the dynamic VC management circuit 20.

The VC matching unit 28 checks whether the VPI/VCI extracted by the VPI/VCI extracting unit 24 from the AAL5-type ATM cell is registered in the VC management memory 26. If the extracted VPI/VCI is not registered in the VC management memory 26, the VC matching unit 28 requests the communication management unit 30 to register the VPI/VCI as a new entry in the VC management memory 26.

After receiving a request for registering the VPI/VCI from the VC matching unit 28, the communication management unit 30 accesses the VP management memory 34, and checks whether a VPI of a virtual path corresponding to the VPI extracted by the VPI/VCI extracting unit 24 is registered. If the corresponding VPI is registered in the VP management memory 34, the communication management unit 30 registers the VPI/VCI extracted by the VPI/VCI extracting unit 24 to the VC management memory 26. If the corresponding VPI is not registered in the VP management memory 34, the communication management unit 30 does not register the VPI/VCI extracted by the VPI/VCI extracting unit 24 to the VC management memory 26. Additionally, if a VPI of a virtual path is deleted from the VP management memory 34, the communication management unit 30 deletes the VPI/VCI of a virtual channel that is included in the virtual path, from the VC management memory 26.

According to the seventh embodiment of the present invention, the dynamic VC management circuit 20 can prevent virtual channels included in a virtual path that is not contracted, from being registered in the VC management memory 26 by using the VP management information stored in the VP management memory 34, and can delete the virtual channels included in the virtual path from the VC management memory 26 as soon as a contract of the virtual path is expired.

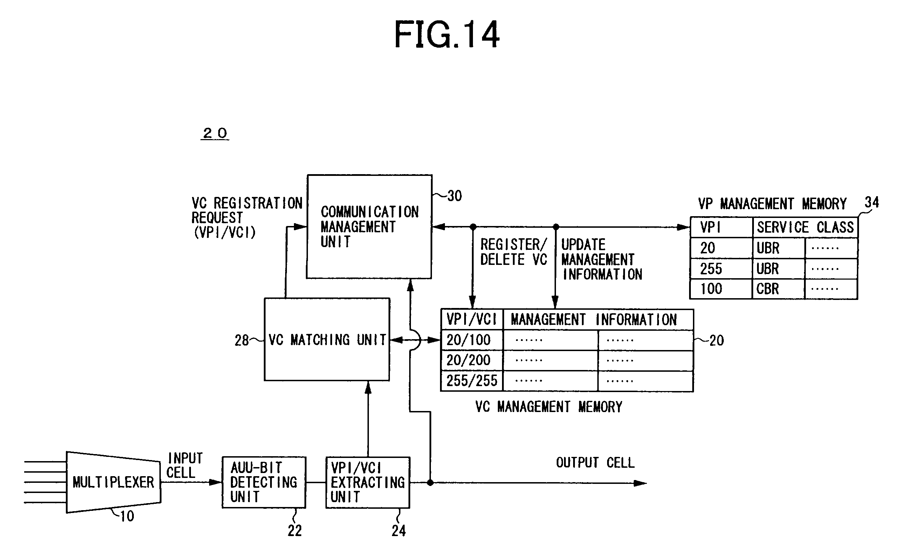

FIG. 14 is a block diagram showing a dynamic VC management circuit according to an eighth embodiment of the present invention.

A dynamic VC management circuit 20 includes an AUU-bit detecting unit 22, a VPI/VCI extracting unit 24, a VC management memory 26, a VC matching unit 28, a communication management unit 30, and a VP management memory 34. The VC management memory 26 stores VC management information, and the VP management memory 34 initially stores service information such as a service class.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as outputting other ATM cells to other devices located outside the dynamic VC management circuit 20.

The VC matching unit 28 checks whether the VPI/VCI extracted by the VPI/VCI extracting unit 24 from the AAL5-type ATM cell is registered in the VC management memory 26. If the extracted VPI/VCI is not registered in the VC management memory 26, the VC matching unit 28 requests the communication management unit 30 to register the VPI/VCI as a new entry in the VC management memory 26.

After receiving a request for registering the VPI/VCI from the VC matching unit 28, the communication management unit 30 accesses the VP management memory 34, and checks a service class of a virtual path which VPI corresponds to the VPI extracted by the VPI/VCI extracting unit 24. If the service class of the virtual path is an UBR (Unspecified Bit Rate), the communication management unit 30 registers the VPI/VCI extracted by the VPI/VCI extracting unit 24 to the VC management memory 26, since a later-described frame unit operation of ATM cells received by the dynamic VC management circuit 20 is necessary. On the other hand, if the service class of the virtual path is a CBR (Constant Bit Rate), the communication management unit 30 does not register the VPI/VCI to the VC management memory 26, since the later-described frame unit operation of ATM cells received by the dynamic VC management circuit 20 is unnecessary.

As shown in FIG. 14, there are three VPI entries 20, 255 and 100 in the VP management memory 34. When a value of a VPI is 20 or 255, a service class for the VPI is the UBR, and a VPI/VCI of a virtual channel corresponding to the VPI is registered to the VC management memory 26. When a value of a VPI is 100, a service class for the VPI is the CBR, and nothing is registered to the VC management memory 26.

Additionally, if a VPI of a virtual path is deleted from the VP management memory 34, the communication management unit 30 deletes the VPI/VCI of a virtual channel that is included in the virtual path from the VC management memory 26.

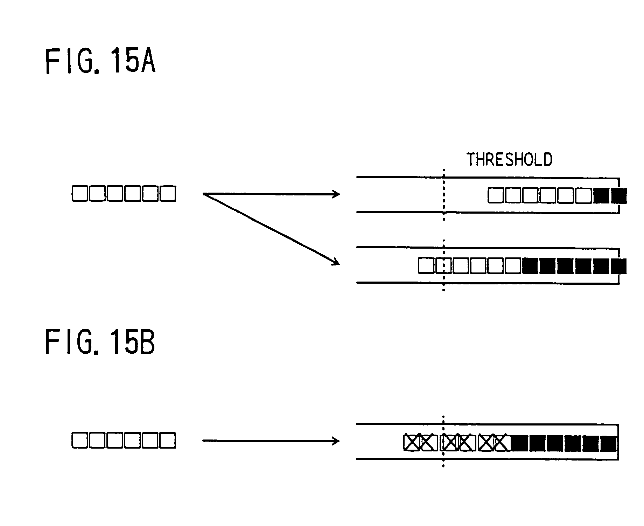

The above-mentioned frame unit operation is, for example, an EPD operation shown in FIG. 15. If a total number of cells that initially exist in a queue is not over a threshold of the queue when a first cell of a frame enters the queue, all cells in the frame are supplied to the queue even if a total number of cells in the queue exceeds the threshold as shown in FIG. 15A. If a total number of cells in the queue is already over the threshold when the first cell of the frame enters the queue, all cells in the frame are discarded from the queue as shown in FIG. 15B.

According to the eighth embodiment of the present invention, the dynamic VC management circuit 20 can prevent virtual channels included in a virtual path that are unnecessary to be processed through the frame unit operation, from being registered in the VC management memory 26 by using the service information stored in the VP management memory 34.

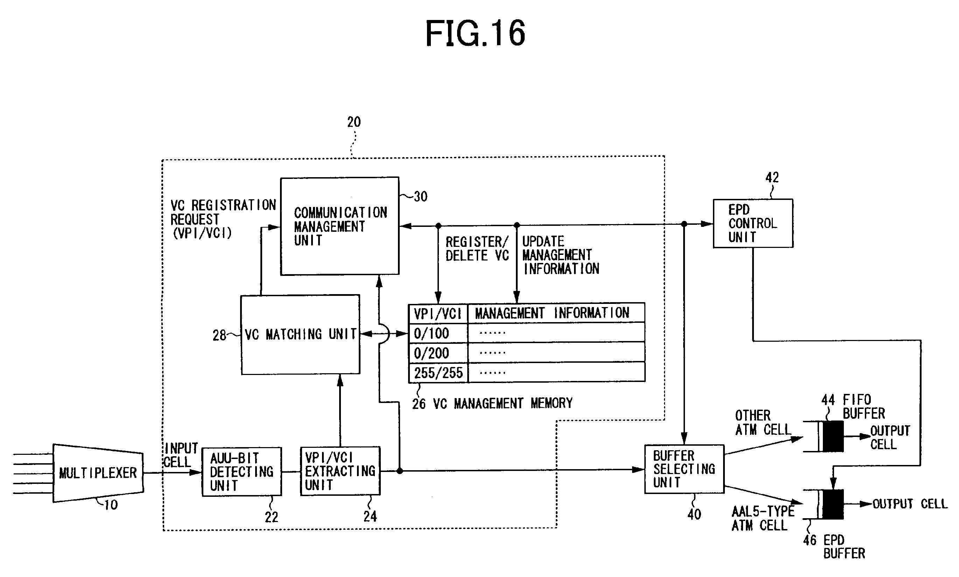

FIG. 16 is a block diagram showing a first embodiment of a virtual-channel (VC) management device whereto a dynamic virtual-channel (VC) management circuit according to the present invention is applied.

The VC management device includes a multiplexer 10, a dynamic VC management circuit 20, a buffer selecting unit 40, an EPD control unit 42, a FIFO buffer 44 and an EPD buffer 46.

The dynamic VC management circuit 20 includes an AUU-bit detecting unit 22, a VPI/VCI extracting unit 24, a VC management memory 26, a VC matching unit 28 and a communication management unit 30. The VC management memory 26 stores management information about virtual channels.

Initially, plural ATM cells with various AALs such as an AAL5, an AAL2 and an AAL1 are multiplexed by the multiplexer 10 located outside the dynamic VC management circuit 20, and are supplied to the AUU-bit detecting unit 22 of the dynamic VC management circuit 20.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as outputting other ATM cells to other devices located outside the dynamic VC management circuit 20.

The VC matching unit 28 checks whether the VPI/VCI extracted by the VPI/VCI extracting unit 24 from the AAL5-type ATM cell is registered in the VC management memory 26. If the extracted VPI/VCI is not registered in the VC management memory 26, the VC matching unit 28 requests the communication management unit 30 to register the VPI/VCI as a new entry in the VC management memory 26.

After receiving a request for registering the VPI/VCI from the VC matching unit 28, the communication management unit 30 registers the VPI/VCI to the VC management memory 26, and then updates the VC management memory 26 by use of management information of the AAL5-type ATM cell. Additionally, the communication management unit 30 outputs control information to outside the dynamic VC management circuit 20. Additionally, the communication management unit 30 monitors all the virtual channels in the VC management memory 26. If any inactive virtual channels are detected, the communication management unit 30 deletes the inactive virtual channels.

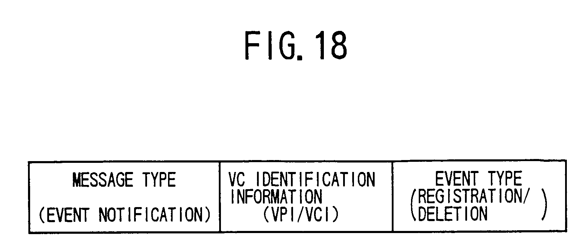

The communication management unit 30 sends the control information to the buffer selecting unit 40 and to the EPD control unit 42 whenever the above-described registration or deletion of a virtual channel is executed. FIG. 18 is a format of the control information supplied from the communication management unit 30 to the buffer selecting unit 40 and to the EPD control unit 42 whenever the above-described registration or deletion of a virtual channel is executed. As shown in FIG. 18, a message type is an event notification, VC identification information includes a value of the extracted VPI/VCI, and an event type is either a registration or a deletion.

The EPD control unit 42 stores first-cell discarding information that is either "true" or "false". The first-cell discarding information contains "true" if the first cell in the frame was discarded, and contains "false" if the first cell in the frame was not discarded. The buffer selecting unit 40 supplies AAL5-type ATM cells to the EPD buffer 46, and supplies ATM cells excluding AAL5-type ATM cells to the FIFO buffer 44 by use of the VC identification information included in the control information.

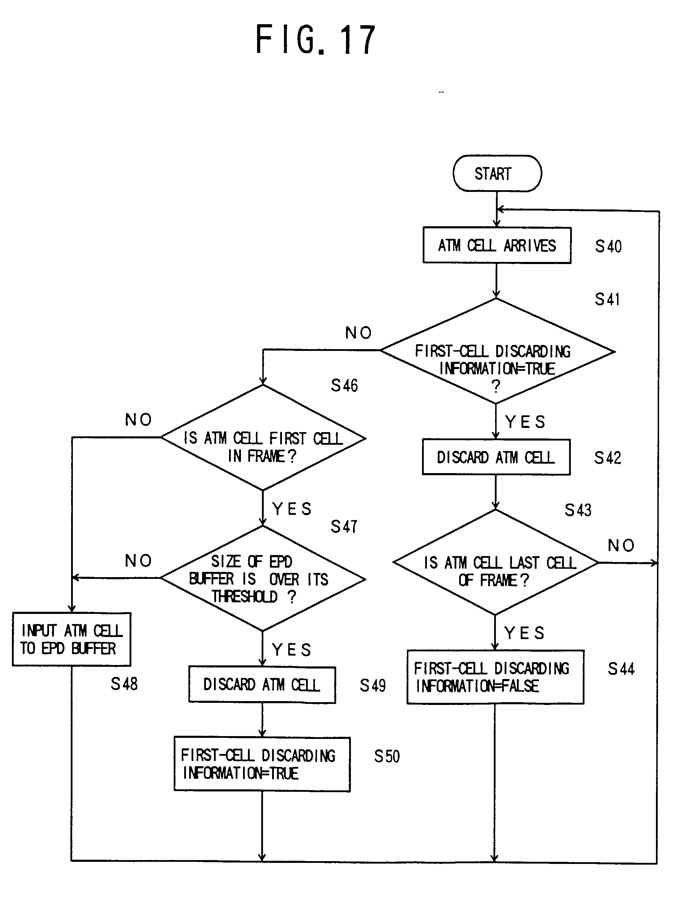

A description will now be given of the EPD operation executed by the VC management device with reference to FIG. 17.

At a step S40 in FIG. 17, the VC management device initially receives an ATM cell. The EPD control unit 42 then checks whether the first-cell discarding information stored therein is "true" or "false" at a step S41. If the first-cell discarding information is "true", the EPD control unit 42 discards the received ATM cell at a step S42. It should be noted that an initial value of the first-cell discarding information is set to "false". Subsequently, the EPD control unit 42 checks whether the discarded ATM cell is an EOP cell at a step S43. If it is ascertained at the step S43 that the discarded ATM cell is not an EOP cell, the EPD control unit 42 keeps the first-cell discarding information as "true", and shifts back to the step S40. If it is ascertained at the step S43 that the discarded ATM cell is an EOP cell, the EPD control unit 42 sets the first-cell discarding information to "false" at a step S44, and shifts back to the step S40.

At the step S41, if the first-cell discarding information is "false", the EPD control unit 42 proceeds to a step S46, and checks whether the received ATM cell is a first ATM cell in a frame. It should be noted that the first cell in the frame is a first ATM cell that arrives at the VC management device after the EOP cell of the previous frame arrives, and has the same VPI/VCI as the EOP cell. If the received ATM cell is not the first cell in the frame, the EPD control unit 42 proceeds to a later described step S48. If the received ATM cell is the first cell in the frame, the EPD control unit 42 proceeds to a step S47, and checks whether a total number of ATM cells in the queue exceeds the threshold of the queue. If the total number of ATM cells in the queue does not exceed the threshold, the EPD control unit 42 proceeds to the step S48. At the step S48, the EPD control unit 42 inputs the received ATM cell to the EPD buffer 46, and then shifts back to the step S40.

At the step S47, if the total number of ATM cells in the queue exceeds the threshold, the EPD control unit 42 discards the received ATM cell at a step S49, and proceeds to a step S50. At the step S50, the EPD control unit 42 sets the first-cell discarding information to "true", and then shifts back to the step S40.

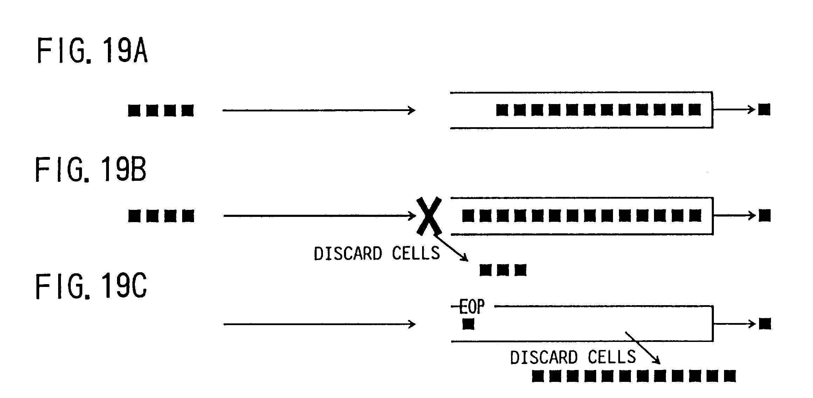

A description will now be given of a PPD operation as a frame unit operation of ATM cells with reference to FIG. 19.

Cells in a frame are initially supplied starting from a first cell in the frame to a queue. The first cell in the frame cell is then outputted from the queue as shown in FIG. 19A. The remaining cells of the frame are then supplied to the queue. If the queue is full, and no more cells of the frame can be supplied thereto, the remaining cells except the last cell (EOP cell) are discarded as shown in FIG. 19B. Additionally, the last cell is stored in the queue, whereas all the other cells therein are discarded as shown in FIG. 19C.

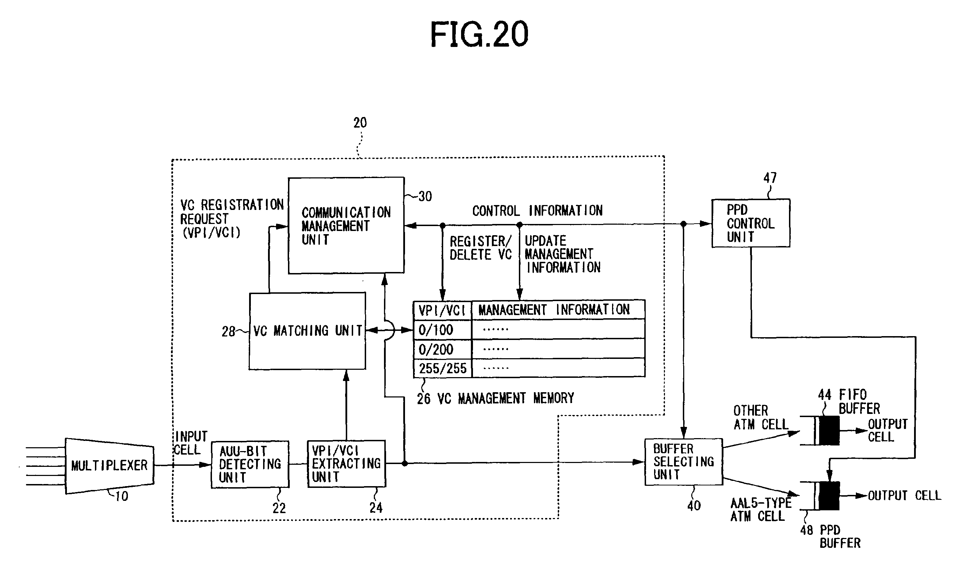

FIG. 20 is a block diagram showing a second embodiment of a virtual-channel (VC) management device whereto a dynamic virtual-channel (VC) management circuit according to the present invention is applied.

The VC management device includes a multiplexer 10, a dynamic VC management circuit 20, a buffer selecting unit 40, a PPD control unit 47, a FIFO buffer 44 and a PPD buffer 48.

The dynamic VC management circuit 20 includes an AUU-bit detecting unit 22, a VPI/VCI extracting unit 24, a VC management memory 26, a VC matching unit 28 and a communication management unit 30.

Initially, plural ATM cells with various AALs such as an AAL5, an AAL2 and an AAL1 are multiplexed by the multiplexer 10 located outside the dynamic VC management circuit 20, and are supplied to the AUU-bit detecting unit 22 of the dynamic VC management circuit 20.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as outputting other ATM cells to other devices located outside the dynamic VC management circuit 20.

The VC matching unit 28 checks whether the VPI/VCI extracted by the VPI/VCI extracting unit 24 from the AAL5-type ATM cell is registered in the VC management memory 26. If the extracted VPI/VCI is not registered in the VC management memory 26, the VC matching unit 28 requests the communication management unit 30 to register the VPI/VCI as a new entry in the VC management memory 26.

After receiving a request for registering the VPI/VCI from the VC matching unit 28, the communication management unit 30 registers the VPI/VCI to the VC management memory 26, and then updates the VC management memory 26 by use of management information of the AAL5-type ATM cell. Additionally, the communication management unit 30 outputs control information to outside the dynamic VC management circuit 20. Additionally, the communication management unit 30 monitors all the virtual channels in the VC management memory 26. If any inactive virtual channels are detected, the communication management unit 30 deletes the inactive virtual channels.

The communication management unit 30 sends the control information to the buffer selecting unit 40 and to the PPD control unit 47 whenever the above-described registration or deletion of a virtual channel is executed. FIG. 18 is a format of the control information supplied from the communication management unit 30 to the buffer selecting unit 40 and to the PPD control unit 47 whenever the above-described registration or deletion of a virtual channel is executed.

The PPD control unit 47 stores cell discarding information that is either "true" or "false". The cell discarding information contains "true" if one or more cells in the frame were discarded, and contains "false" if no cells in the frame were discarded. The buffer selecting unit 40 supplies AAL5-type ATM cells to the PPD buffer 48, and supplies ATM cells excluding AAL5-type ATM cells to the FIFO buffer 44 by use of the VC identification information included in the control information.

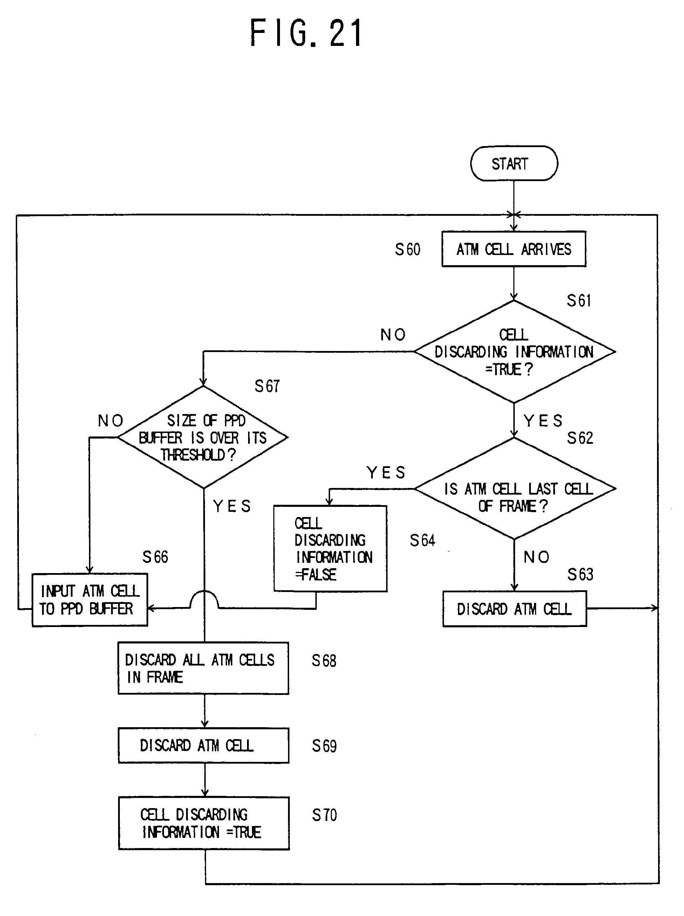

A description will now be given of the PPD operation executed by the VC management device with reference to FIG. 21.

At a step S60 in FIG. 21, the VC management device initially receives an ATM cell. The PPD control unit 47 then checks whether the cell discarding information stored therein is "true" or "false" at a step S61. If the cell discarding information is "true", the PPD control unit 47 proceeds to a step S62. It should be noted that an initial value of the cell discarding information is set to "false". Subsequently, the PPD control unit 47 checks whether the ATM cell is an EOP cell at the step S62. If it is ascertained at the step S62 that the ATM cell is not an EOP cell, the PPD control unit 47 discards the ATM cell at a step S63, and shifts back to the step S60. If it is ascertained at the step S62 that the ATM cell is an EOP cell, the PPD control unit 47 sets the cell discarding information to "false", and proceeds to a later described step S66.

At the step S61, if the cell discarding information is "false", the PPD control unit 47 proceeds to a step S67, and checks whether a total number of ATM cells in the queue exceeds the threshold of the queue. If the total number of ATM cells in the queue does not exceed the threshold, the PPD control unit 47 proceeds to the step S66. At the step S66, the PPD control unit 47 inputs the received ATM cell to the PPD buffer 48, and then shifts back to the step S60.

At the step S67, if the total number of ATM cells in the queue exceeds the threshold, the PPD control unit 47 discards all the ATM cells in the same frame with the received ATM cell at a step S68, and proceeds to a step S69. At the step S69, the PPD control unit 47 discards the received ATM cell. At a step S70, the PPD control unit 47 sets the cell discarding information to "true", and then shifts back to the step S60.

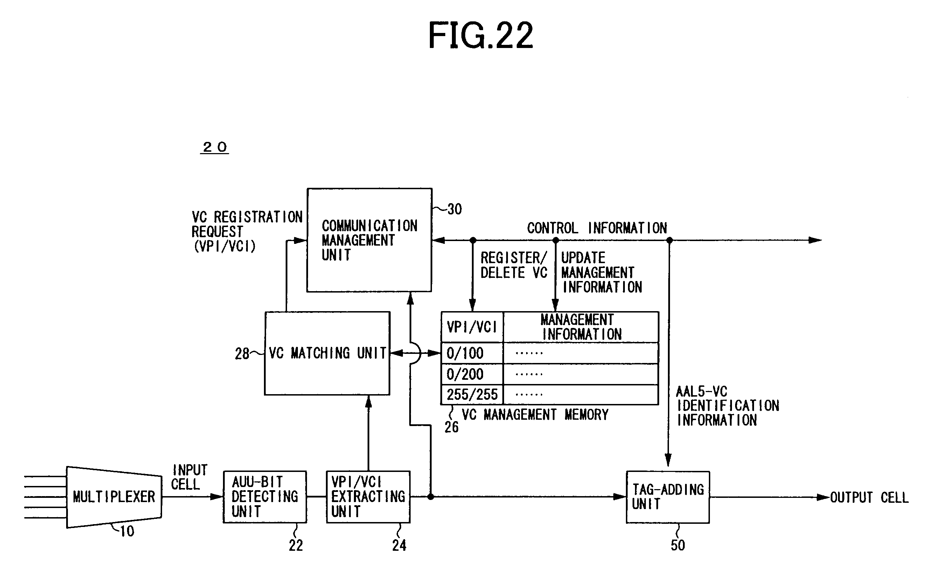

A description will now be given of a dynamic virtual-channel (VC) management circuit that includes a function to add a tag to an ATM cell so that an AAL5-type virtual channel of the ATM cell is easily identified. FIG. 22 is a block diagram showing a dynamic VC management circuit according to a ninth embodiment of the present invention.

A dynamic VC management circuit 20 includes an AUU-bit detecting unit 22, a VPI/VCI extracting unit 24, a VC management memory 26, a VC matching unit 28, a communication management unit 30, and a tag-adding unit 50.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 and the tag-adding unit 50.

The VC matching unit 28 checks whether the VPI/VCI extracted by the VPI/VCI extracting unit 24 from the AAL5-type ATM cell is registered in the VC management memory 26. If the extracted VPI/VCI is not registered in the VC management memory 26, the VC matching unit 28 requests the communication management unit 30 to register the VPI/VCI as a new entry in the VC management memory 26.

After receiving a request for registering the VPI/VCI from the VC matching unit 28, the communication management unit 30 registers the VPI/VCI to the VC management memory 26, and then updates the VC management memory 26 by use of management information of the AAL5-type ATM cell. Additionally, the communication management unit 30 outputs control information to outside the dynamic VC management circuit 20. Additionally, the communication management unit 30 monitors all the virtual channels in the VC management memory 26. If any inactive virtual channels are detected, the communication management unit 30 deletes the inactive virtual channels. Each time a VPI/VCI is registered to or deleted from the VC management memory 26, control information is provided from the communication control unit 30 to the tag-adding unit 50.

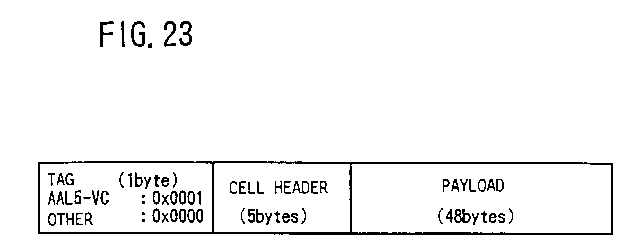

The tag-adding unit 50 identifies AAL5-type ATM cells depending on the control information supplied from the communication management unit 30. The tag-adding unit 50 adds a binary number "00000001" as a tag to an AAL5-type ATM cell provided from the VPI/VCI extracting unit 24, and adds a binary number "00000000" as another tag to an ATM cell other than AAL5-type ATM cells provided from the VPI/VCI extracting unit 24. An ATM cell with a tag is shown in FIG. 23.

According to the ninth embodiment of the present invention, a device connected to the dynamic VC management circuit 20 can detect a type of an ATM cell provided therefrom by simply checking a tag attached to the ATM cell.

A description will now be given of a dynamic virtual-channel (VC) management circuit that deletes an entry which time counter is the closest to its timeout among all the entries in a VC management memory when there is no more space for a new entry therein, and registers the new entry thereto.

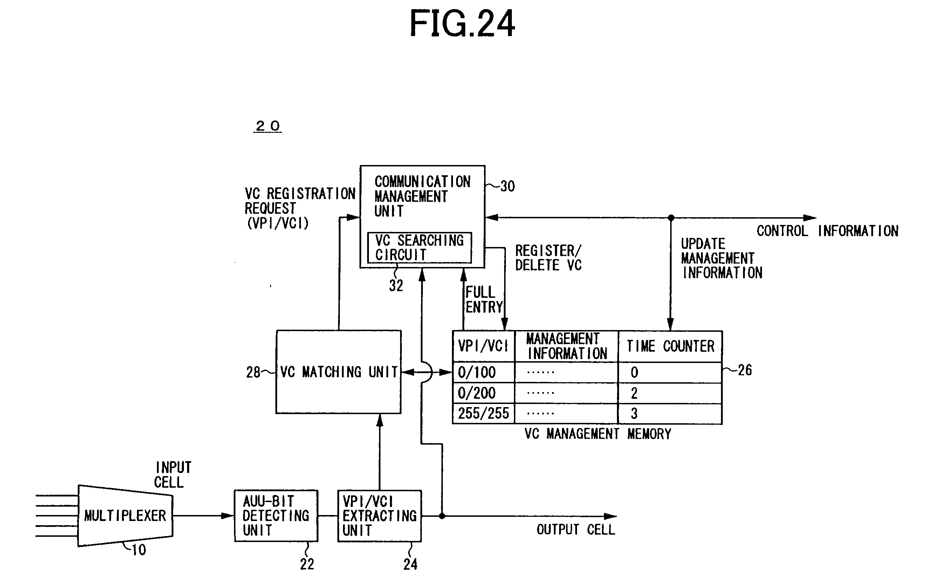

FIG. 24 is a block diagram showing a dynamic VC management circuit according to a tenth embodiment of the present invention.

A dynamic VC management circuit 20 includes an AUU-bit detecting unit 22, a VPI/VCI extracting unit 24, a VC management memory 26, a VC matching unit 28 and a communication management unit 30. As shown in FIG. 24, a VC searching circuit 32 is provided in the communication management unit 30, and a time counter is provided for each VPI/VCI in the VC management memory 26.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as outputting other ATM cells to other devices located outside the dynamic VC management circuit 20.

The VC matching unit 28 checks whether a VPI/VCI extracted by the VPI/VCI extracting unit 24 from the AAL5-type ATM cell is registered in the VC management memory 26. If the extracted VPI/VCI is already registered in the VC management memory 26, the communication management unit 30 proceeds to a later described EOP cell detecting process.

If the extracted VPI/VCI is not registered in the VC management memory 26, the VC matching unit 28 requests the communication management unit 30 to register the VPI/VCI as a new entry in the VC management memory 26. Simultaneously, the VC management memory 26 sends a notification signal to the communication management unit 30 if there is no more space for a new entry in the VC management memory 26. If the notification signal is not supplied from the VC management memory 26 to the communication management unit 30, the communication management unit 30 registers the VPI/VCI to the VC management memory 26. If the notification signal is supplied from the VC management memory 26 to the communication management unit 30, the VC searching circuit 32 locates a VPI/VCI which time counter is the closest to its timeout among all VPI/VCI entries in the VC management memory 26 by checking a time counter for each VPI/VCI in order.

Subsequently, the communication management unit 30 deletes the located VPI/VCI from the VC management memory 26, and then the VPI/VCI of the AAL5-type ATM cell extracted by the VPI/VCI extracting unit 24 is registered as a new entry to the VC management memory 26. At the following EOP cell detecting process, the AAL5-type ATM cell is checked whether it is an EOP cell. If it is ascertained that the AAL5-type ATM cell is not an EOP cell, the AAL5-type cell is outputted to other devices located outside the dynamic VC management circuit 20. If it is ascertained that the AAL5-type ATM cell is the EOP cell, the communication management unit 30 resets the time counter for the VPI/VCI of the AAL5-type ATM cell. Additionally, the communication management unit 30 increments time counters for all VPI/VCI entries in the VC management memory 26 each time a certain period elapses.

According to the tenth embodiment of the present invention, the dynamic VC management circuit 20 deletes a virtual channel entry which time counter is the closest to its timeout among all the virtual channel entries in the VC management memory 26 when there is no more space for a new entry therein, and registers the new entry thereto.

A description will now be given of a dynamic virtual-channel (VC) management circuit that deletes a virtual channel entry which infrequency counter includes the closest number to a predetermined number among all the entries in a VC management memory when there is no more space for a new entry therein, and registers a new entry thereto.

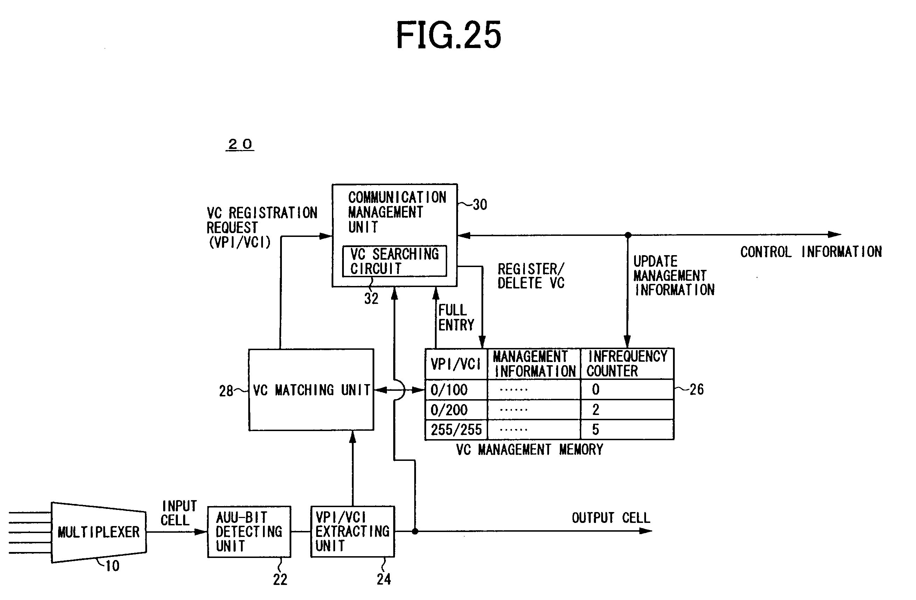

FIG. 25 is a block diagram showing a dynamic VC management circuit according to an eleventh embodiment of the present invention.

A dynamic VC management circuit 20 includes an AUU-bit detecting unit 22, a VPI/VCI extracting unit 24, a VC management memory 26, a VC matching unit 28 and a communication management unit 30. As shown in FIG. 11, a VC searching circuit 32 is provided in the communication management unit 30, and an infrequency counter is provided for each VPI/VCI in the VC management memory 26.

When the AUU-bit detecting unit 22 detects an ATM cell received from outside the dynamic VC management circuit 20 as an ATM cell other than an AAL5-type ATM cell, the ATM cell is outputted to other devices from the VPI/VCI extracting unit 24.

When the AUU-bit detecting unit 22 detects an ATM cell received from outside the dynamic VC management circuit 20 as an AAL5-type ATM cell, the other components in the dynamic VC management circuit 20 execute the following processes.

The VC matching unit 28 checks whether a VPI/VCI extracted by the VPI/VCI extracting unit 24 from the AAL5-type ATM cell is registered in the VC management memory 26. If the extracted VPI/VCI is already registered in the VC management memory 26, the communication management unit 30 proceeds to a later described EOP cell detecting process.

If the extracted VPI/VCI is not registered in the VC management memory 26, the VC matching unit 28 requests the communication management unit 30 to register the VPI/VCI as a new entry in the VC management memory 26. Simultaneously, the VC management memory 26 sends a notification signal to the communication management unit 30 if there is no more space for a new entry in the VC management memory 26. If the notification signal is not supplied from the VC management memory 26 to the communication management unit 30, the VPI/VCI is registered as a new entry to the VC management memory 26. If the notification signal is supplied from the VC management memory 26 to the communication management unit 30, the VC searching circuit 32 locates a VPI/VCI which infrequency counter includes the closest number to the predetermined number among all the VPI/VCI entries in the VC management memory 26 by checking an infrequency counter for each VPI/VCI in order.

Subsequently, the communication management unit 30 deletes the located VPI/VCI from the VC management memory 26, and the VPI/VCI of the AAL5-type ATM cell extracted by the VPI/VCI extracting unit 24 is registered as a new entry to the VC management memory 26.

In the EOP cell detecting process, the communication management unit 30 checks whether the AAL5-type ATM cell is an EOP cell. If it is ascertained that the AAL5-type ATM cell is not the EOP cell, the AAL5-type ATM cell is outputted from the VPI/VCI extracting unit 24 to other devices. If it is ascertained that the AAL5-type ATM cell is the EOP cell, the communication management unit 30 resets the infrequency counter corresponding to the VPI/VCI of the AAL5-type ATM cell that is newly registered to the VC management memory 26. The communication management unit 30 then increments an infrequency counter corresponding to each VPI/VCI other than the VPI/VCI of the AAL5-type ATM cell in the VC management memory 26 by "1". Additionally the VPI/VCI extracting unit 24 outputs the AAL5-type ATM cell to other devices.

According to the eleventh embodiment of the present invention, the dynamic VC management circuit 20 deletes a virtual channel entry which infrequency counter includes the closest number to the predetermined number among all the virtual channel entries in the VC management memory 26 when there is no more space for a new entry therein, and registers the new entry thereto.

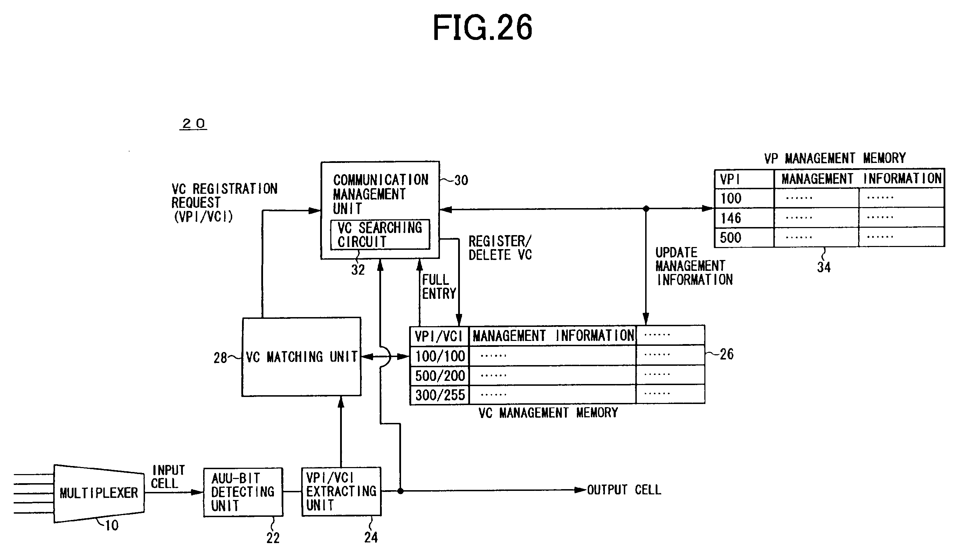

A description will now be given of a dynamic virtual-channel (VC) management circuit that uses VP management information stored in a VP management memory for VC management information, and stops registering a VPI/VCI to the VC management memory when the VC management memory is full. FIG. 26 is a block diagram showing a dynamic VC management circuit according to a twelfth embodiment of the present invention.

A dynamic VC management circuit 20 includes an AUU-bit detecting unit 22, a VPI/VCI extracting unit 24, a VC management memory 26, a VC matching unit 28, a communication management unit 30, a VC searching circuit 32 and a VP management memory 34. The VC management memory 26 stores VC management information, and the VP management memory 34 initially stores VP management information. A time counter is provided for each VPI/VCI in the VC management memory 26.

When detecting an ATM cell received from outside the dynamic VC management circuit 20 as an AALS-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as outputting other ATM cells to other devices located outside the dynamic VC management circuit 20.

The VC matching unit 28 checks whether the VPI/VCI extracted by the VPI/VCI extracting unit 24 from the AAL5-type ATM cell is registered in the VC management memory 26. If the extracted VPI/VCI is not registered in the VC management memory 26, the VC matching unit 28 requests the communication management unit 30 to register the VPI/VCI as a new entry in the VC management memory 26.

After receiving a request for registering the VPI/VCI from the VC matching unit 28, the communication management unit 30 accesses the VP management memory 34, and checks whether a VPI of a virtual path corresponding to the VPI extracted by the VPI/VCI extracting unit 24 is registered. If the corresponding VPI is registered in the VP management memory 34, the communication management unit 30 registers the VPI/VCI extracted by the VPI/VCI extracting unit 24 to the VC management memory 26. If the corresponding VPI is not registered in the VP management memory 34, the communication management unit 30 does not register the VPI/VCI extracted by the VPI/VCI extracting unit 24 to the VC management memory 26.

The VC management memory 26 sends a notification signal to the communication management unit 30 if there is no more space for a new entry in the VC management memory 26. If the notification signal is not supplied from the VC management memory 26 to the communication management unit 30, the communication management unit 30 registers the VPI/VCI to the VC management memory 26. If the notification signal is supplied, the communication management unit 30 does not register the VPI/VCI to the VC management memory 26 anymore.

According to the twelfth embodiment of the present invention, a device connected to the dynamic VC management circuit can identify an AAL-typed ATM cell only by checking a tag of an ATM cell provided from the dynamic VC management circuit.

A description will now be given of a virtual-channel (VC) management device that uses VPIs and service class information stored in a VP management memory for managing virtual channels, and deletes inactive virtual channels from a VC management memory by use of time counters, and executes an EPD operation on a received ATM cell.

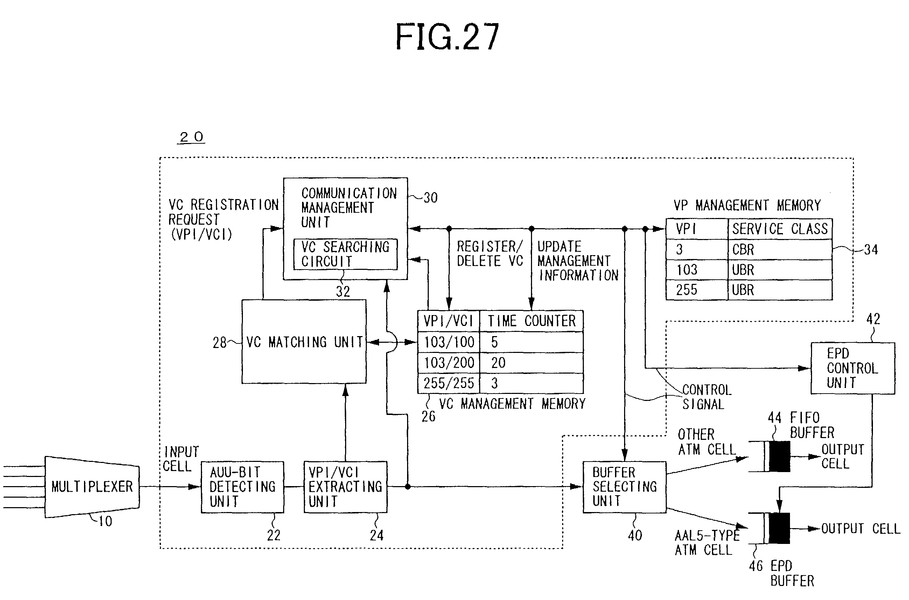

FIG. 27 is a block diagram showing a third embodiment of a virtual-channel (VC) management device whereto a dynamic virtual-channel (VC) management circuit according to the present invention is applied.

The VC management device includes a multiplexer 10, a dynamic VC management circuit 20, a buffer selecting unit 40, an EPD control unit 42, a FIFO buffer 44 and an EPD buffer 46.

The dynamic VC management circuit 20 includes an AUU-bit detecting unit 22, a VPI/VCI extracting unit 24, a VC management memory 26, a VC matching unit 28, a communication management unit 30, a VC searching circuit 32 and a VP management memory 34. A time counter is provided in the VC management memory 26. Service class information is provided in the VP management memory 34.

Initially, plural ATM cells with various AALs such as an AAL5, an AAL2 and an AAL1 are multiplexed by the multiplexer 10 located outside the dynamic VC management circuit 20, and are initially supplied to the AUU-bit detecting unit 22 of the dynamic VC management circuit 20.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as providing all the ATM cells supplied to the dynamic VC management circuit 20 to the buffer selecting unit 40.

The VC matching unit 28 checks whether the VPI/VCI extracted by the VPI/VCI extracting unit 24 from the AAL5-type ATM cell is registered in the VC management memory 26. If the extracted VPI/VCI is already registered in the VC management memory 26, and the AAL5-type ATM cell with the VPI/VCI is an EOP cell, the communication management unit 30 resets the time counter corresponding to the VPI/VCI in the VC management memory 26.

If the extracted VPI/VCI is not registered in the VC management memory 26, the VC matching unit 28 requests the communication management unit 30 to register the VPI/VCI as a new entry in the VC management memory 26. Simultaneously, the VC management memory 26 sends a notification signal to the communication management unit 30 if there is no more space for a new entry in the VC management memory 26.

After receiving a request for registering the VPI/VCI from the VC matching unit 28, the communication management unit 30 accesses the VP management memory 34, and checks a service class of a virtual path which VPI corresponds to the VPI extracted by the VPI/VCI extracting unit 24.

If the service class of the virtual path is an UBR, the communication management unit 30 checks whether it receives the notification signal from the VC management memory 26. If the notification signal is supplied from the VC management memory 26 to the communication management unit 30, the VC searching circuit 32 locates a VPI/VCI which time counter is the closest to its timeout among all the VPIs/VCIs in the VC management memory 26 by checking a time counter for each VPI/VCI in order.

Subsequently, the communication management unit 30 deletes the located VPI/VCI from the VC management memory 26, and the VPI/VCI of the AAL5-type ATM cell extracted by the VPI/VCI extracting unit 24 is registered as a new entry to the VC management memory 26. If the communication management unit 30 does not receive the notification signal, it registers the VPI/VCI to the VC management memory 26.

On the other hand, if the VPI of the virtual path corresponding to the VPI extracted by the VPI/VCI extracting unit 24 is not registered to the VP management memory 34, or if the service class of the virtual path is a CBR, the communication management unit 30 does not register the VPI/VCI to the VC management memory 26.

Additionally, if a VPI of a virtual path is deleted from the VP management memory 34, the communication management unit 30 deletes VPIs/VCIs of virtual channels that are included in the virtual path from the VC management memory 26.

Additionally, the communication management unit 30 increments time counters for all VPIs/VCIs in the VC management memory 26 each time a certain period elapses.

Whenever the above-described registration or deletion of a virtual channel is executed, the communication management unit 30 sends control information to the buffer selecting unit 40 and to the EPD control unit 42.

The EPD control unit 42 stores first-cell discarding information that is either "true" or "false". The first-cell discarding information contains "true" if the first cell in the frame was discarded, and contains "false" if the first cell in the frame was not discarded. Additionally, the EPD control unit 42 controls discarding of an ATM cell supplied to the VC management device, and inputting of the ATM cell to the EPD buffer 46. The buffer selecting unit 40 supplies AAL5-type ATM cells to the EPD buffer 46, and supplies ATM cells excluding AAL5-type ATM cells to the FIFO buffer 44 by use of VC identification information included in the control information.

Accordingly, the VC management device can discard all the ATM cells in a frame, and execute an EPD operation on the ATM cells.

A description will now be given of a virtual-channel (VC) management device that deletes the most inactive virtual channel from a VC management memory by use of an infrequency counter, adds a tag to an ATM cell, and executes a PPD operation on a received ATM cell.

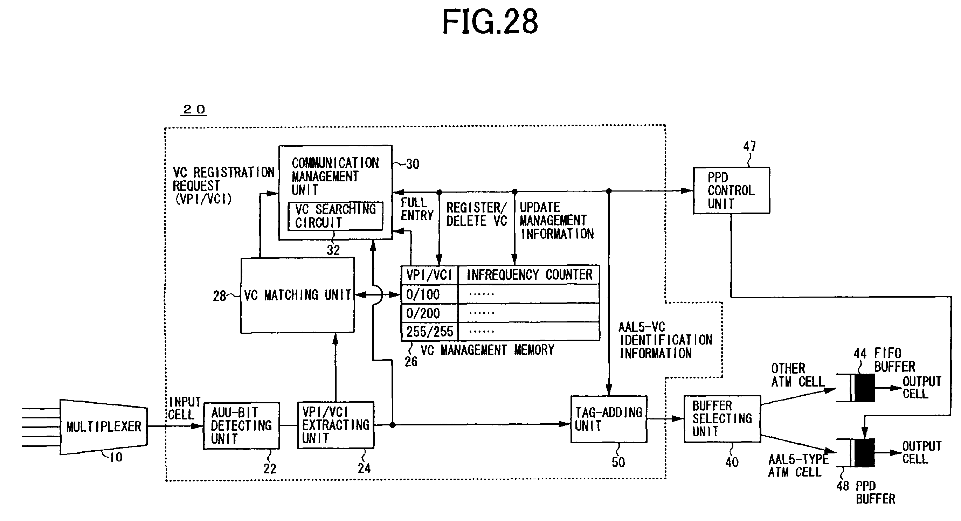

FIG. 28 is a block diagram showing a fourth embodiment of a virtual-channel (VC) management device whereto a dynamic virtual-channel (VC) management circuit according to the present invention is applied.

The VC management device includes a multiplexer 10, a dynamic VC management circuit 20, a buffer selecting unit 40, a PPD control unit 47, a FIFO buffer 44 and a PPD buffer 48.

The dynamic VC management circuit 20 includes an AUU-bit detecting unit 22, a VPI/VCI extracting unit 24, a VC management memory 26, a VC matching unit 28, a communication management unit 30, a VC searching circuit 32 and a tag-adding unit 50.

Plural ATM cells with various AALs such as an AAL5, an AAL2 and an AAL1 are multiplexed by the multiplexer 10 located outside the dynamic VC management circuit 20, and are supplied to the AUU-bit detecting unit 22 of the dynamic VC management circuit 20.

When detecting an ATM cell received from outside the dynamic VC management circuit 20 as an AAL5-type ATM cell, the AUU-bit detecting unit 22 requests the VPI/VCI extracting unit 24 to extract a VPI/VCI of the AAL5-type ATM cell. Subsequently, the VPI/VCI extracting unit 24 extracts the VPI/VCI from the AAL5-type ATM cell, and supplies the extracted VPI/VCI to the VC matching unit 28. Additionally, the VPI/VCI extracting unit 24 transfers the AAL5-type ATM cell received through the AUU-bit detecting unit 22 to the communication management unit 30 as well as providing to the tag-adding unit 50.

The VC matching unit 28 checks whether the VPI/VCI extracted by the VPI/VCI extracting unit 24 from the AAL5-type ATM cell is registered in the VC management memory 26. If the extracted VPI/VCI is already registered in the VC management memory 26, the communication management unit 30 resets the infrequency counter corresponding to the VPI/VCI in the VC management memory 26.

If the extracted VPI/VCI is not registered in the VC management memory 26, the VC matching unit 28 requests the communication management unit 30 to register the VPI/VCI as a new entry in the VC management memory 26.

The communication management unit 30 then increments an infrequency counter corresponding to each VPI/VCI in the VC management memory 26 other than the extracted VPI/VCI by "1". If an infrequency counter exceeds a fixed number by incrementing by "1", a VPI/VCI corresponding to the infrequency counter is deleted from the VC management memory 26.

Simultaneously, the VC management memory 26 sends a notification signal to the communication management unit 30 if there is no more space for a new entry in the VC management memory 26.

If the notification signal is supplied to the communication management unit 30 when the VC matching unit 28 requests the communication management unit 30 to register the VPI/VCI to the VC management memory 26, the VC searching circuit 32 in the communication management unit 30 locates a VPI/VCI which infrequency counter includes the highest number among all the VPIs/VCIs in the VC management memory 26 by checking an infrequency counter for each VPI/VCI in order.

Subsequently, the communication management unit 30 deletes the located VPI/VCI from the VC management memory 26, and the VPI/VCI of the AAL5-type ATM cell extracted by the VPI/VCI extracting unit 24 is registered as a new entry to the VC management memory 26. The communication management unit 30 sends control information to the tag-adding unit 50 and to the PPD control unit 47 whenever the above-described registration or deletion of a virtual channel is executed.

The tag-adding unit 50 identifies AAL5-type ATM cells depending on the control information supplied from the communication management unit 30. The tag-adding unit 50 adds a binary number "00000001" as a tag to an AAL5-type ATM cell provided from the VPI/VCI extracting unit 24, and adds a binary number "00000000" as another tag to an ATM cell other than AAL5-type ATM cells provided from the VPI/VCI extracting unit 24. An ATM cell with a tag is shown in FIG. 23.

The PPD control unit 47 stores cell discarding information that is either "true" or "false". The cell discarding information contains "true" if one or more cells in the frame were discarded, and contains "false" if no cells in the frame were discarded. Additionally, the PPD control unit 47 controls discarding of a received ATM cell, and inputting of the received ATM cell to the PPD buffer 48. The buffer selecting unit 40 supplies AAL5-type ATM cells to the PPD buffer 48, and supplies ATM cells excluding AAL5-type ATM cells to the FIFO buffer 44 by use of the VC identification information included in the control information.

Accordingly, the VC management device can discard all the ATM cells in a frame, and execute a PPD operation on the ATM cells.

The above description is provided in order to enable any person skilled in the art to make and use the invention and sets forth the best mode contemplated by the inventors of carrying out the invention.

The present invention is not limited to the specially disclosed embodiments and variations, and modifications may be made without departing from the scope and spirit of the invention.

The present application is based on Japanese Priority Application No. 11-336457, filed on November 26, 1999, the entire contents of which are hereby incorporated by reference.

## Claims

1. A dynamic virtual-channel management circuit (20), characterized by comprising:
a virtual-channel detecting unit (22) that detects a specific virtual channel among virtual channels provided to said dynamic virtual-channel management circuit (20); and
a virtual-channel management memory (26) that stores contract information on the specific virtual channel detected by said virtual-channel detecting unit (22).

2. The dynamic virtual-channel management circuit (20) as claimed in claim 1, characterized in that the specific channel includes an AAL5-type virtual channel.

3. The dynamic virtual-channel management circuit (20) as claimed in claim 1, characterized in that said virtual-channel detecting unit (22) detects the specific virtual channel by checking a PTI (Payload-Type Identifier) field in a cell header of an ATM cell supplied to said dynamic virtual-channel management circuit (20).

4. The dynamic virtual-channel management circuit (20) as claimed in claim 1, further characterized by comprising a virtual-channel matching unit (28) that permits the contract information on the specific virtual channel to be stored in said virtual-channel management memory (26) only if there is no contract information corresponding to said contract information on the specific virtual channel in said virtual-channel management memory (26).

5. The dynamic virtual-channel management circuit (20) as claimed in claim 1, further characterized by comprising a management-information updating unit (30, S6) that updates management information of a virtual-channel in said virtual-channel management memory (26) by use of management information of an ATM cell when the ATM cell is supplied to said dynamic virtual-channel management circuit (20).

6. The dynamic virtual-channel management circuit (20) as claimed in claim 1, further characterized by comprising:
a time counter that is provided for each virtual channel in said virtual-channel management memory (26), and counts a certain period of time;
a time-counter resetting unit (30, S16) that resets said time counter corresponding to the virtual channel of a last cell in a frame when the last cell in the frame is supplied to said dynamic virtual-channel management circuit (20); and
a first virtual-channel deleting unit (30, S18) that deletes the contract information of a virtual channel which time counter timeouts, from said virtual-channel management memory (26).

7. The dynamic virtual-channel management circuit (20) as claimed in claim 1, further characterized by comprising:
an infrequency counter that is provided for each virtual channel in said virtual-channel management memory (26);
an infrequency-counter updating unit (30, S16) that resets said infrequency counter corresponding to the virtual channel of the last cell in a frame when the last cell in the frame is supplied to said dynamic virtual-channel management circuit (20), and increments infrequency counters of virtual channels other than said infrequency counter corresponding to said virtual channel; and
a second virtual-channel deleting unit (30, S18) that deletes the contract information of a virtual channel which infrequency counter exceeds a certain number, from said virtual-channel management memory (26).

8. The dynamic virtual-channel management circuit (20) as claimed in claim 1, further characterized by comprising a registration-preventing unit (30, S24) that prevents contract information of a virtual channel of an ATM cell from being stored to said virtual-channel management memory (26) when said virtual-channel management memory (26) is full.

9. The dynamic virtual-channel management circuit (20) as claimed in claim 6, further characterized by comprising a third virtual-channel deleting unit (30, S25) that deletes the contract information of a virtual channel which time counter is the closest to its timeout among virtual channels in said virtual-channel management memory (26) when an ATM cell is supplied to said dynamic virtual-channel management circuit (20) while said virtual-channel management memory (26) is full.

10. The dynamic virtual-channel management circuit (20) as claimed in claim 7, further characterized by comprising a fourth virtual-channel deleting unit (30, S25) that deletes the contract information of a virtual channel which infrequency counter includes a largest number among virtual channels in said virtual-channel management memory (26) if an ATM cell is supplied to said dynamic virtual-channel management circuit (20) while said virtual-channel management memory (26) is full.

11. The dynamic virtual-channel management circuit (20) as claimed in claim 1, further characterized by comprising:
a virtual-path management memory (34) that stores the contract information of a virtual path;
a first registration-permitting unit (30, S26) that permits the contract information of the virtual channel of an ATM cell to be stored to said virtual-channel management memory (26) if the virtual channel is included in the virtual path in the virtual-path management memory (34) when the ATM cell is supplied to the dynamic virtual-channel management circuit (20); and
a fifth virtual-channel deleting unit (30, S25) that deletes all the contract information of virtual channels included in the virtual path from the virtual-channel management memory (26), when the virtual path in the virtual-path management memory (34) is deleted.

12. The dynamic virtual-channel management circuit (20) as claimed in claim 11, further characterized by comprising a second registration-permitting unit (30, S26) that permits the virtual channel of an ATM cell to be stored to said virtual-channel management memory (26) if a service class that included in the contract information of the virtual path requests for a frame unit operation of the ATM cell when the ATM cell is supplied to the dynamic virtual-channel management circuit (20).

13. The dynamic virtual-channel management circuit (20) as claimed in claim 1, further characterized by comprising a tag-adding unit (50) that adds a tag to an ATM cell supplied from said virtual-channel detecting unit (22) in order to identify a type of the ATM cell.

14. A device characterized by comprising:
a dynamic virtual-channel management circuit (20) including a virtual-channel detecting unit (22) that detects a specific virtual channel among virtual channels provided to said dynamic virtual-channel management circuit (20), and a virtual-channel management memory (26) that stores contract information on the specific virtual channel detected by said virtual-channel detecting unit (22);
a first cell-buffer (44) that stores ATM cells other than an ATM cell with the specific virtual channel;
a second cell-buffer (46, 48) that stores the ATM cell with the specific virtual channel; and
a buffer selecting unit (40) that supplies the ATM cells other than the ATM cell with the specific virtual channel to the first cell-buffer, and the ATM cell with the specific virtual channel to the second cell-buffer (46, 48).

15. The device as claimed in claim 14, further characterized by comprising a first frame management unit (42) that checks whether a first cell in a frame is supplied to said second cell-buffer or discarded for each virtual channel stored in said virtual-channel management memory (26), and supplies cells following the first cell in the frame to said second cell-buffer (46) when the first cell is supplied to said second cell-buffer (46), and then discards the cells following the first cell in the frame when the first cell is discarded.

16. The device as claimed in claim 14, further characterized by comprising a second frame management unit (47) that checks whether a cell in the frame is discarded before a last cell of the frame is supplied to said second cell-buffer (48), and then discards cells following the cell in the frame except the last cell of the frame when the cell in the frame is discarded before the last cell in the frame is supplied to said second cell-buffer (48).

17. A method of managing a virtual channel in a dynamic virtual-channel management circuit (20) that includes a virtual-channel management memory (26), characterized by comprising the steps of:
detecting a specific virtual channel among virtual channels provided to said dynamic virtual-channel management circuit (20);
permitting the contract information on the specific virtual channel to be stored in said virtual-channel management memory (26) only if there is no contract information corresponding to said contract information on the specific virtual channel in said virtual-channel management memory (26); and
storing contract information on the specific virtual channel in said virtual-channel management memory (26).

18. The method as claimed in claim 17, further characterized by comprising the step of deleting an inactive virtual channel from said virtual-channel management memory (26).

19. The method as claimed in claim 17, further characterized by comprising the step of preventing the contract information of a virtual channel of an ATM cell from being stored to said virtual-channel management memory (26) when said virtual-channel management memory (26) is full.

20. The method as claimed in claim 17, further characterized by comprising the step of adding a tag to an ATM cell supplied to said dynamic virtual-channel management circuit (20) in order to identify a type of the ATM cell.
